# EUROPEAN PATENT SPECIFICATION

(11) **EP 4 496 530 B1**
(45) Date of publication and mention of the grant of the patent: **04.03.2026**
(21) Application number: 23718150.8
(22) Date of filing: 23.03.2023
(51) Int. Cl.: A61C 7/00, A61C 7/08, B33Y 80/00, B33Y 50/02, B33Y 30/00

(54) **DIRECT FABRICATION OF ORTHODONTIC ALIGNERS**
DIREKTE HERSTELLUNG VON ORTHODONTISCHEN AUSRICHTERN
FABRICATION DIRECTE D'ALIGNEURS ORTHODONTIQUES

(30) Priority: 23.03.2022 US 202263269832 P
(43) Date of publication of application: 29.01.2025
(73) Proprietor: Align Technology, Inc., San Jose, CA 95134 (US)
(72) Inventor: WANG, Yuxiang, Newark, California 94560 (US); SHANJANI, Yaser, Milpitas, California 95035 (US); YU, Zhou (Jonelle), Santa Clara, California 95054 (US); TJHIA, Crystal, Sunnyvale, California 94087 (US); SU, Kangning, Pullman, Washington 99163 (US); VALDIVIESO CASIQUE, Manlio Fabio, Santa Clara, California 95054 (US); CAI, Luyao, Santa Clara, California 95054 (US); SATO, Jun, San Jose, California 95126 (US); MEENAKSHISUNDARAM, Viswanath, Santa Clara, Virginia 95054 (US); LIU, Siyi, Plano, Texas 75025 (US); POKOTILOV, Pavel, Santa Clara, California 95054 (US); DEWS-FLICK, John, Palo Alto, California 94304 (US); ANANDAN, Sudharshan, Sunnyvale, California 94089 (US)
(74) Representative: Carpmaels & Ransford LLP
(86) International application number: PCT/US2023/064876
(87) International publication number: WO 2023/183884

(56) References cited:
- US-A1- 2017 007 360
- US-A1- 2020 100 864
- US-A1- 2022 031 426

## Description

### BACKGROUND

### BACKGROUND

Orthodontic and dental treatments using a series of patient-removable appliances (e.g., "aligners") are very useful for treating patients, and in particular for treating malocclusions. Direct fabrication, sometimes called 3D printing, of aligners can reduce waste of and increase production times as compared to thermoforming aligners over a directly fabricated mold. However, direct fabrication of aligners can have less than desirable result in at least some instances. Direct fabrication can result in inaccurately fabricated aligners or aligners with defects that result in less than desirable orthodontic treatment.

Current aligners can also have less than desirable physical structures. For example, bite ramps and other aligner features of shell appliances have a consistent thickness that may result in less than desirable movement forces or may wear out prematurely due to patient mastication and bite force on the features.

The methods and apparatuses described herein may improve aligner fabrication, including potentially increasing the quality of the aligners and the accuracy of their fabrication which may result in increased predictability of treatment and resulting shorter treatment times.

The methods and apparatuses described herein may also improve aligner features and provide new ways of generating aligner shapes and features which may result in increased patient comfort, increased patient compliance, increased aligner durability, increased predictability in treatment and new ways of treating malocclusions.

US2020100864A1 discloses methods of predicting aligner breakage by simulating loads on weak regions using material properties and digital model, computing stress/strain/energy, evaluating regional strength, and determining if damage criteria are met.

### SUMMARY

The invention is as defined in the appended claims.

As will be described in greater detail below, the present disclosure describes various systems and methods for direct fabrication of orthodontic aligners.

In addition, the systems and methods described herein may improve the functioning of a computing device by reducing computing resources and overhead for generating models of orthodontic aligners and may improve the quality of fabricated aligners, thereby improving processing efficiency of the computing device and resulting aligners over conventional approaches. These systems and methods may also improve the field of orthodontic treatment by improving aligner fabrication and predictability of treatment.

### BRIEF DESCRIPTION OF THE DRAWINGS

A better understanding of the features, advantages and principles of the present disclosure will be obtained by reference to the following detailed description that sets forth illustrative embodiments, and the accompanying drawings of which:
FIG. 1 illustrates an exemplary tooth repositioning appliance or aligner that can be worn by a patient in order to achieve an incremental repositioning of individual teeth in the jaw, in accordance with some embodiments.

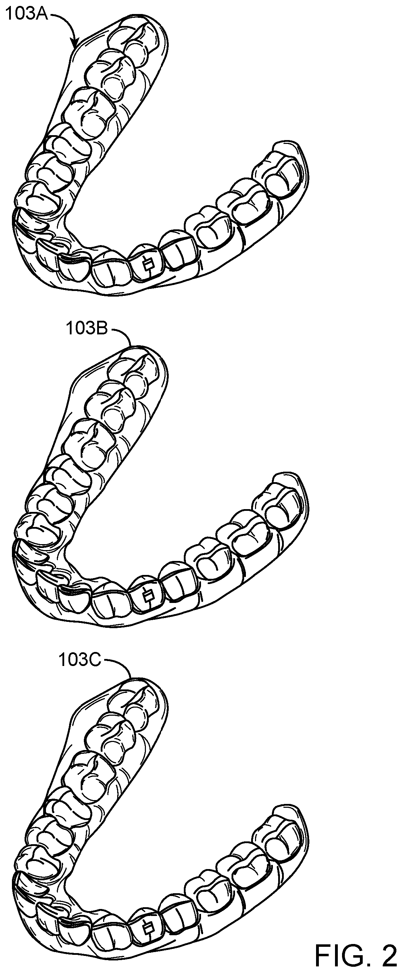

FIG. 2 illustrates a tooth repositioning system, in accordance with some embodiments.
FIG. 3 shows a method of orthodontic treatment using a plurality of appliances, in accordance with embodiments;
FIG. 4 shows a method for digitally planning an orthodontic treatment, in accordance with embodiments;
FIG. 5 shows a simplified block diagram of a data processing system, in accordance with embodiments;
FIG. 6 shows a method of generating instructions for fabricating an aligner with compensation of deviations during fabrication, in accordance with embodiments;
FIG. 7 shows a method of real-time generation instructions for fabricating an aligner with compensation of deviations during fabrication, in accordance with embodiments;
FIG. 8 shows aspects of a method of real-time generation instructions for fabricating an aligner with compensation of deviations during fabrication, in accordance with embodiments;
FIG. 9 shows a method of real-time generation instructions for fabricating an aligner with compensation of deviations during fabrication, in accordance with embodiments;
FIG. 10 shows a method of generating instructions for fabricating an aligner with compensation of deviations during fabrication, in accordance with embodiments;
FIG. 11 shows a method of training a neural network for use in fabricating an aligner with compensation of deviations during fabrication, in accordance with embodiments;

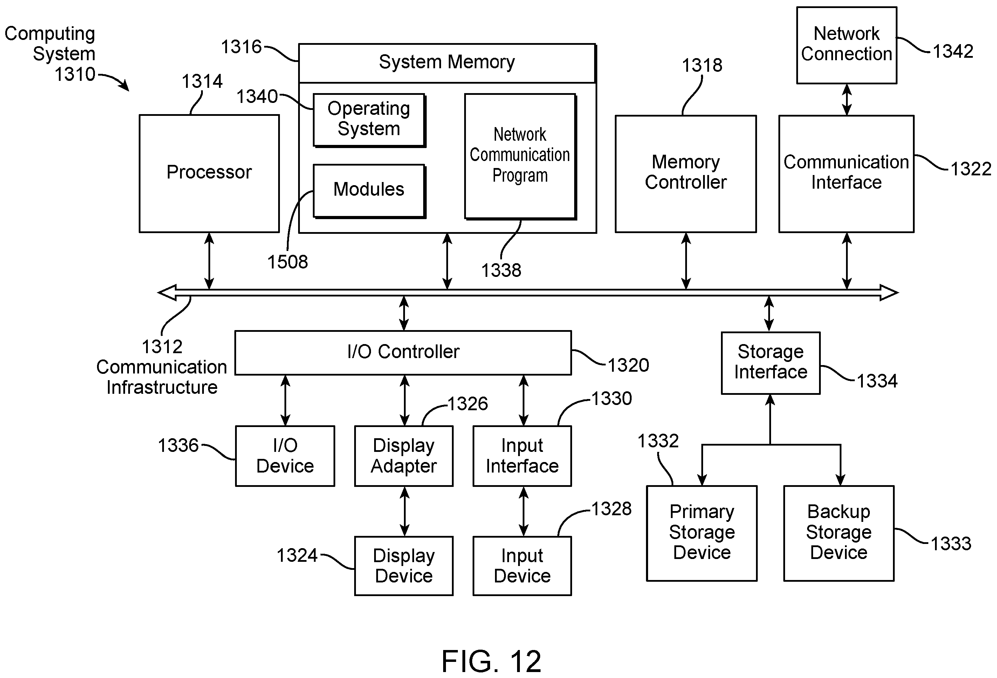

FIG. 12 shows a block diagram of an example computing system capable of implementing one or more embodiments described and/or illustrated herein, in accordance with embodiments;
FIG. 13 shows a block diagram of an example computing network capable of implementing one or more of the embodiments described and/or illustrated herein, in accordance with embodiments;
FIGS. 14A, 14B, and 14C depict occlusal stability features, such as bite ramps, generated using thickness maps, in accordance with embodiments;
FIG. 15 depicts a thickness map of an aligner, in accordance with embodiments;
FIG. 16 depicts a cross section of an occlusal portion of an aligner generated using thickness maps for intruding or extruding teeth, over respective teeth of a patient, in accordance with embodiments;
FIG. 17A depicts a cross section of occlusal and interproximal portions of an aligner generated using thickness maps, in accordance with embodiments;
FIG. 17B depicts a model of interproximal forces imparted by an aligner on teeth, in accordance with embodiments;
FIG. 18 depicts a method of generating and adjusting the distribution of forces and generating a thickness map, in accordance with embodiments;
FIG. 19A depicts a disoccluded patient's jaw in accordance with embodiments
FIG. 19B depicts a method for generating a thickness map for disoccluding a patient's jaw, in accordance with embodiments.

### DETAILED DESCRIPTION

The following detailed description and provides a better understanding of the features and advantages of the inventions described in the present disclosure in accordance with the embodiments disclosed herein. Although the detailed description includes many specific embodiments, these are provided by way of example only and should not be construed as limiting the scope of the inventions disclosed herein.

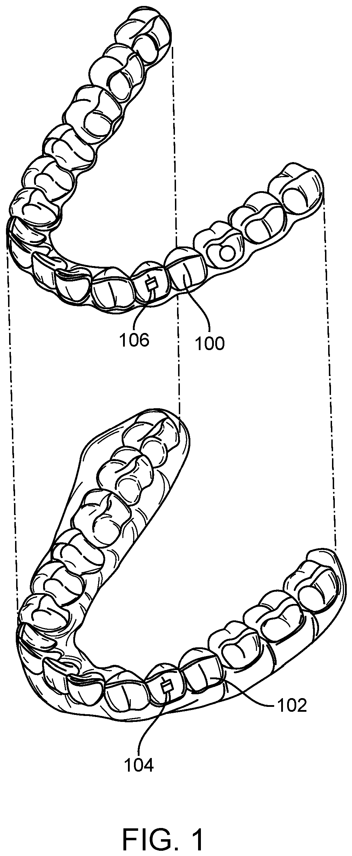

FIG. 1 illustrates an exemplary tooth repositioning appliance 100, such as an aligner that can be worn by a patient in order to achieve an incremental repositioning of individual teeth 102 in the jaw. The appliance can include a shell (e.g., a continuous polymeric shell or a segmented shell) having teeth-receiving cavities that receive and resiliently reposition the teeth. An appliance or portion(s) thereof may be indirectly fabricated using a physical model of teeth. For example, an appliance (e.g., polymeric appliance) can be formed using a physical model of teeth and a sheet of suitable layers of polymeric material. The physical model (e.g., physical mold) of teeth can be formed through a variety of techniques, including 3D printing. The appliance can be formed by thermoforming the appliance over the physical model. In some embodiments, a physical appliance is directly fabricated, e.g., using additive manufacturing techniques, from a digital model of an appliance. In some embodiments, the physical appliance may be created through a variety of direct formation techniques, such as 3D printing. An appliance can fit over all teeth present in an upper or lower jaw, or less than all of the teeth. The appliance can be designed specifically to accommodate the teeth of the patient (e.g., the topography of the tooth-receiving cavities matches the topography of the patient's teeth), and may be fabricated based on positive or negative models of the patient's teeth generated by impression, scanning, and the like. Alternatively, the appliance can be a generic appliance configured to receive the teeth, but not necessarily shaped to match the topography of the patient's teeth. In some cases, only certain teeth received by an appliance will be repositioned by the appliance while other teeth can provide a base or anchor region for holding the appliance in place as it applies force against the tooth or teeth targeted for repositioning. In some cases, some or most, and even all, of the teeth will be repositioned at some point during treatment. Teeth that are moved can also serve as a base or anchor for holding the appliance as it is worn by the patient. In some embodiments, no wires or other means will be provided for holding an appliance in place over the teeth. In some cases, however, it may be desirable or necessary to provide individual attachments or other anchoring elements 104 on teeth 102 with corresponding receptacles or apertures 106 in the appliance 100 so that the appliance can apply a selected force on the tooth. Exemplary appliances, including those utilized in the Invisalign^{®} System, are described in numerous patents and patent applications assigned to Align Technology, Inc. including, for example, in U.S. Pat. Nos. 6,450,807, and 5,975,893, as well as on the company's website, which is accessible on the World Wide Web (see, e.g., the URL "invisalign.com"). Examples of tooth-mounted attachments suitable for use with orthodontic appliances are also described in patents and patent applications assigned to Align Technology, Inc., including, for example, U.S. Pat. Nos. 6,309,215 and 6,830,450.

FIG. 1 illustrates a tooth repositioning system 101 including a plurality of appliances 103A, 103B, 103C. Any of the appliances described herein can be designed and/or provided as part of a set of a plurality of appliances used in a tooth repositioning system. Each appliance may be configured so a tooth-receiving cavity has a geometry corresponding to an intermediate or final tooth arrangement intended for the appliance. The patient's teeth can be progressively repositioned from an initial tooth arrangement to a target tooth arrangement by placing a series of incremental position adjustment appliances over the patient's teeth. For example, the tooth repositioning system 101 can include a first appliance 103A corresponding to an initial tooth arrangement, one or more intermediate appliances 103B corresponding to one or more intermediate arrangements, and a final appliance 103C corresponding to a target arrangement. A target tooth arrangement can be a planned final tooth arrangement selected for the patient's teeth at the end of all planned orthodontic treatment. Alternatively, a target arrangement can be one of some intermediate arrangements for the patient's teeth during the course of orthodontic treatment, which may include various different treatment scenarios, including, but not limited to, instances where surgery is recommended, where interproximal reduction (IPR) is appropriate, where a progress check is scheduled, where anchor placement is best, where palatal expansion is desirable, where restorative dentistry is involved (e.g., inlays, onlays, crowns, bridges, implants, veneers, and the like), etc. As such, it is understood that a target tooth arrangement can be any planned resulting arrangement for the patient's teeth that follows one or more incremental repositioning stages. Likewise, an initial tooth arrangement can be any initial arrangement for the patient's teeth that is followed by one or more incremental repositioning stages.

Optionally, in cases involving more complex movements or treatment plans, it may be beneficial to utilize auxiliary components (e.g., features, accessories, structures, devices, components, and the like) in conjunction with an orthodontic appliance. Examples of such accessories include but are not limited to elastics, wires, springs, bars, arch expanders, palatal expanders, twin blocks, occlusal blocks, bite ramps, mandibular advancement splints, bite plates, pontics, hooks, brackets, headgear tubes, springs, bumper tubes, palatal bars, frameworks, pin-and-tube apparatuses, buccal shields, buccinator bows, wire shields, lingual flanges and pads, lip pads or bumpers, protrusions, divots, and the like. In some embodiments, the appliances, systems and methods described herein include improved orthodontic appliances with integrally formed features that are shaped to couple to such auxiliary components, or that replace such auxiliary components.

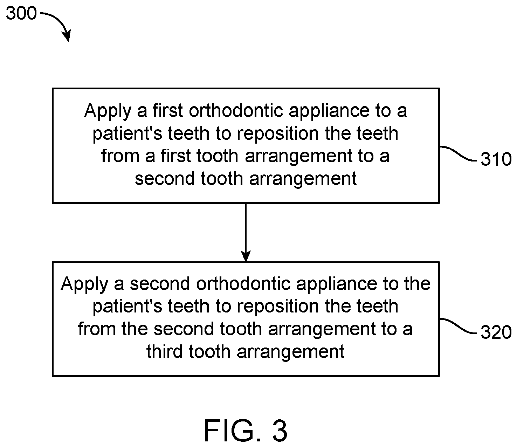

FIG. 3 illustrates a method 300 of orthodontic treatment using a plurality of appliances, in accordance with many embodiments. The method 300 can be practiced using any of the appliances or appliance sets described herein. In step 310, a first orthodontic appliance is applied to a patient's teeth in order to reposition the teeth from a first tooth arrangement to a second tooth arrangement. In step 320, a second orthodontic appliance is applied to the patient's teeth in order to reposition the teeth from the second tooth arrangement to a third tooth arrangement. The method 300 can be repeated as necessary using any suitable number and combination of sequential appliances in order to incrementally reposition the patient's teeth from an initial arrangement to a target arrangement. The appliances can be generated all at the same stage or in sets or batches (e.g., at the beginning of a stage of the treatment), or one at a time, and the patient can wear each appliance until the pressure of each appliance on the teeth can no longer be felt or until the maximum amount of expressed tooth movement for that given stage has been achieved. A plurality of different appliances (e.g., a set) can be designed and even fabricated prior to the patient wearing any appliance of the plurality. After wearing an appliance for an appropriate period of time, the patient can replace the current appliance with the next appliance in the series until no more appliances remain. The appliances are generally not affixed to the teeth and the patient may place and replace the appliances at any time during the procedure (e.g., patient-removable appliances). The final appliance or several appliances in the series may have a geometry or geometries selected to overcorrect the tooth arrangement. For instance, one or more appliances may have a geometry that would (if fully achieved) move individual teeth beyond the tooth arrangement that has been selected as the "final." Such over-correction may be desirable in order to offset potential relapse after the repositioning method has been terminated (e.g., permit movement of individual teeth back toward their pre-corrected positions). Over-correction may also be beneficial to speed the rate of correction (e.g., an appliance with a geometry that is positioned beyond a desired intermediate or final position may shift the individual teeth toward the position at a greater rate). In such cases, the use of an appliance can be terminated before the teeth reach the positions defined by the appliance. Furthermore, over-correction may be deliberately applied in order to compensate for any inaccuracies or limitations of the appliance.

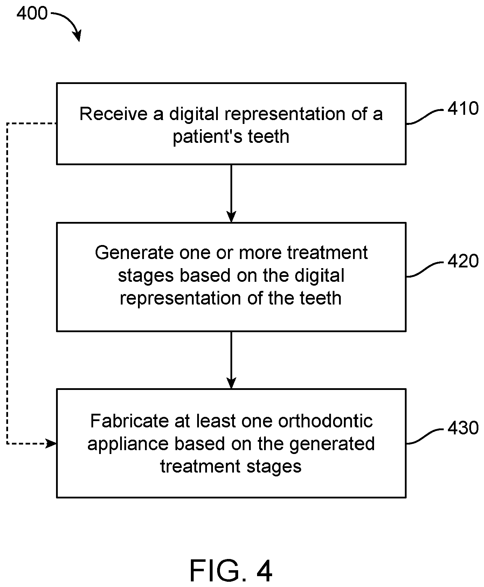

FIG. 4 illustrates a method 400 for digitally planning an orthodontic treatment and/or design or fabrication of an appliance, in accordance with many embodiments. The method 400 can be applied to any of the treatment procedures described herein and can be performed by any suitable data processing system. Any embodiment of the appliances described herein can be designed or fabricated using the method 400.

In step 410, a digital representation of a patient's teeth is received. The digital representation can include surface topography data for the patient's intraoral cavity (including teeth, gingival tissues, etc.). The surface topography data can be generated by directly scanning the intraoral cavity, a physical model (positive or negative) of the intraoral cavity, or an impression of the intraoral cavity, using a suitable scanning device (e.g., a handheld scanner, desktop scanner, etc.).

In step 420, one or more treatment stages are generated based on the digital representation of the teeth. The treatment stages can be incremental repositioning stages of an orthodontic treatment procedure designed to move one or more of the patient's teeth from an initial tooth arrangement to a target arrangement. For example, the treatment stages can be generated by determining the initial tooth arrangement indicated by the digital representation, determining a target tooth arrangement, and determining movement paths of one or more teeth in the initial arrangement necessary to achieve the target tooth arrangement. The movement path can be optimized based on minimizing the total distance moved, preventing collisions between teeth, avoiding tooth movements that are more difficult to achieve, or any other suitable criteria.

In step 430, at least one orthodontic appliance is fabricated based on the generated treatment stages. For example, a set of appliances can be fabricated to be sequentially worn by the patient to incrementally reposition the teeth from the initial arrangement to the target arrangement. Some of the appliances can be shaped to accommodate a tooth arrangement specified by one of the treatment stages. Alternatively or in combination, some of the appliances can be shaped to accommodate a tooth arrangement that is different from the target arrangement for the corresponding treatment stage. For example, as previously described herein, an appliance may have a geometry corresponding to an overcorrected tooth arrangement. Such an appliance may be used to ensure that a suitable amount of force is expressed on the teeth as they approach or attain their desired target positions for the treatment stage. As another example, an appliance can be designed in order to apply a specified force system on the teeth and may not have a geometry corresponding to any current or planned arrangement of the patient's teeth.

In some instances, staging of various arrangements or treatment stages may not be necessary for design and/or fabrication of an appliance. As illustrated by the dashed line in FIG. 4, design and/or fabrication of an orthodontic appliance, and perhaps a particular orthodontic treatment, may include use of a representation of the patient's teeth (e.g., receive a digital representation of the patient's teeth 410), followed by design and/or fabrication of an orthodontic appliance based on a representation of the patient's teeth in the arrangement represented by the received representation.

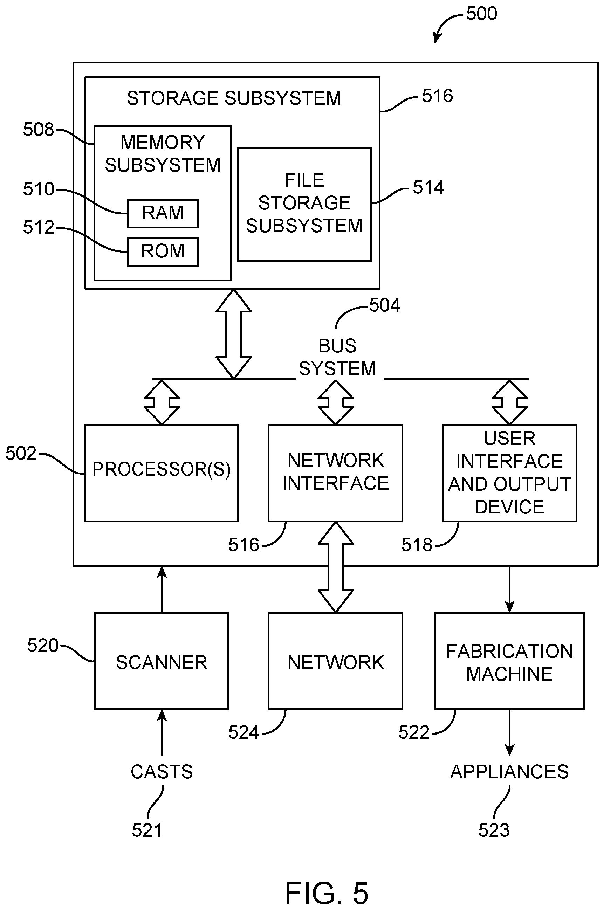

FIG. 5 is a simplified block diagram of a data processing system 1400 that may be used in executing methods and processes described herein. The data processing system 500 typically includes at least one processor 502 that communicates with one or more peripheral devices via bus subsystem 504. These peripheral devices typically include a storage subsystem 506 (memory subsystem 508 and file storage subsystem 514), a set of user interface input and output devices 518, and an interface to outside networks 516. This interface is shown schematically as "Network Interface" block 516, and is coupled to corresponding interface devices in other data processing systems via communication network interface 524. Data processing system 500 can include, for example, one or more computers, such as a personal computer, workstation, mainframe, laptop, and the like.

The user interface input devices 518 are not limited to any particular device, and can typically include, for example, a keyboard, pointing device, mouse, scanner, interactive displays, touchpad, joysticks, etc. Similarly, various user interface output devices can be employed in a system of the invention, and can include, for example, one or more of a printer, display (e.g., visual, non-visual) system/subsystem, controller, projection device, audio output, and the like.

Storage subsystem 506 maintains the basic required programming, including computer readable media having instructions (e.g., operating instructions, etc.), and data constructs. The program modules discussed herein are typically stored in storage subsystem 506. Storage subsystem 506 typically includes memory subsystem 508 and file storage subsystem 514. Memory subsystem 508 typically includes a number of memories (e.g., RAM 510, ROM 512, etc.) including computer readable memory for storage of fixed instructions, instructions and data during program execution, basic input/output system, etc. File storage subsystem 514 provides persistent (non-volatile) storage for program and data files, and can include one or more removable or fixed drives or media, hard disk, floppy disk, CD-ROM, DVD, optical drives, and the like. One or more of the storage systems, drives, etc. may be located at a remote location, such coupled via a server on a network or via the internet/World Wide Web. In this context, the term "bus subsystem" is used generically so as to include any mechanism for letting the various components and subsystems communicate with each other as intended and can include a variety of suitable components/systems that would be known or recognized as suitable for use therein. It will be recognized that various components of the system can be, but need not necessarily be at the same physical location, but could be connected via various local-area or wide-area network media, transmission systems, etc.

Scanner 520 includes any means for obtaining a digital representation (e.g., images, surface topography data, etc.) of a patient's teeth (e.g., by scanning physical models of the teeth such as casts 521, by scanning impressions taken of the teeth, or by directly scanning the intraoral cavity), which can be obtained either from the patient or from treating professional, such as an orthodontist, and includes means of providing the digital representation to data processing system 500 for further processing. Scanner 520 may be located at a location remote with respect to other components of the system and can communicate image data and/or information to data processing system 500, for example, via a network interface 524. Fabrication system 522 fabricates appliances 523 based on a treatment plan, including data set information received from data processing system 500. Fabrication machine 522 can, for example, be located at a remote location and receive data set information from data processing system 500 via network interface 524.

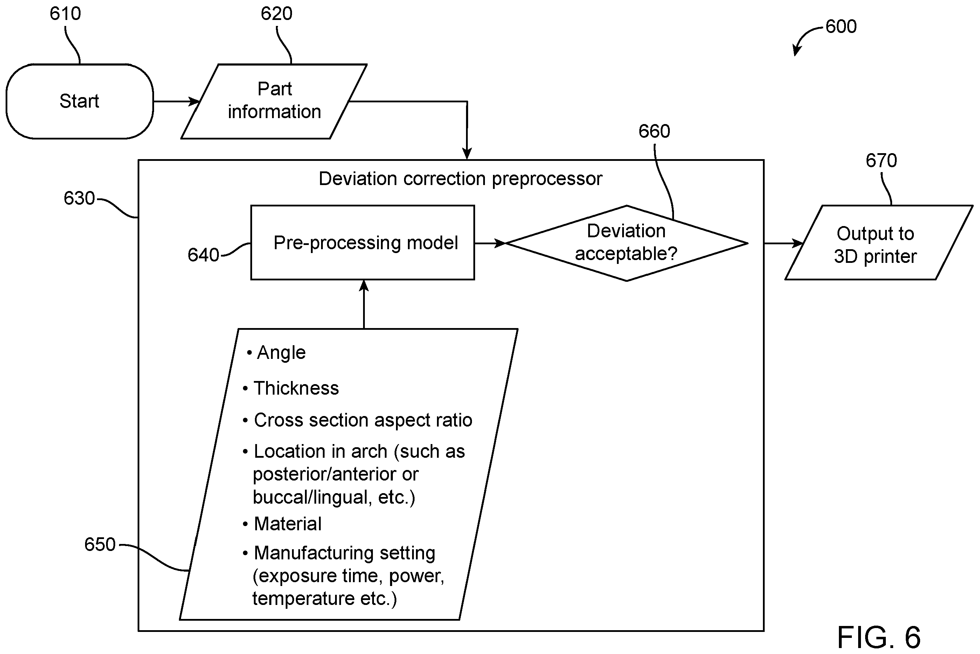

FIG. 6 shows a method 600 of generating instructions for fabricating an aligner with compensation of deviations during fabrication, in accordance with embodiments discussed herein. The method 600 may start at block 610. The method 600 may take place before fabrication of a physical aligner.

At block 620, part information is generated or received. The part information may be generated based on a treatment plan to move the patient's teeth from a first arrangement towards a second arrangement. The part information may include a three-dimensional model of an orthodontic aligner for a stage of a treatment plan. In some embodiments, the three-dimensional model may include slices of a three-dimensional model of the orthodontic aligner. The slices may be layers used for generating instructions for printing for directly fabricating the orthodontic aligner.

At block 630, a deviation correction processor may modify the part information. The deviation correction processor may receive the part information as generated or received at block 620. The part information may be considered a preprocessed model of the aligner or other orthodontic device that has not yet been processed to compensate for potential deviations from the model that may occur during fabrication. The deviation correction processor may process the pre-processed model 640 in order to predict the deviations of the fabricated aligner as compared to the desired geometric shape of the digital three-dimensional model of the aligner.

The predictions can be based on analytical and/or numerical simulation technology used to generate a prediction model. In some embodiments, the prediction model may be based on partial differential equation-based models that may be solved using various techniques, such as finite element or finite volume methods. For example, by simulating the direct fabrication of the aligner. Or by data generated through past simulations of fabrications of aligners.

In some embodiments, the prediction model may be a machine learning model such as a Bayesian model, a regression model, a decision tree algorithm, or support vector machines or neural networks trained based on experimental data. The prediction models may be trained based on a comparison of the shape of previously printed orthodontic aligners with the shape of the three-dimensional model of the orthodontic aligners. The printed orthodontic aligners may be digitally imaged in two or three dimensions such as by CT scanning x-ray photographic images, etc. in some embodiments, the prediction model may use clustering techniques, pattern searches, or dimension reduction, based on a comparison of previously designed and printed orthodontic aligners. Building the prediction model may include identifying clusters of deviations, geometric patterns in the aligner and their associated deviations, and reduction in dimensions in order to simplify the analysis.

In some embodiments, types of deviations may be clustered using clustering techniques. Zero deviation regions of aligners may be classified based on geometric shape or other factors.

The deviation correction processor and a prediction model may use one or more parameters 650, which may include variables, when generating a prediction of the deviation of the fabricated aligner as compared to the digital three-dimensional model of the aligner. In some embodiments, a parameter may include an angle of the aligner. The angle may be an angle of a surface of aligner with respect to a build direction, such as an angle with respect to the build platform upon which the physical orthodontic aligner is built. In some embodiments, the angle may be an angle of a surface of the aligner with respect to a plane or axis of the aligner, such as an occlusal plane of the aligner. In some embodiments, a parameter may include the thickness of the aligner. The aligner thickness may be measured perpendicular to an exterior surface of the aligner, parallel with the build surface, perpendicular to the build surface, or with respect to a portion of the aligner itself. In some embodiments, the thickness may be thickness of the aligner from a surface of the aligner facing outward from or not part of a tooth receiving cavity to a surface of the tooth receiving cavity such as an interior surface that defines the interior shape of the tooth receiving cavity.

In some embodiments, a parameter may include a cross section aspect ratio of the aligner in a plane. In some embodiments the plane may be a plane parallel to the build surface upon which the aligner is printed or for directly fabricated, or perpendicular to a build direction, sometimes denoted as the Z direction in direct fabrication. The cross section aspect ratio may be determined based on a ratio of the longest overall length dimension of the aligner in a plane and the longest length dimension perpendicular to the longest overall length dimension. In some embodiments, the cross section aspect ratio may be of a feature of aligner rather than of the entire plane of the aligner. In direct fabrication, physical objects may be built layer by layer, sometimes called slices, each slice being generated based on a cross section of the three-dimensional model and having a thickness. The plane used to determine a cross section aspect ratio or other features in a plane may be such a slice.

In some embodiments, a parameter may include the location in an arch of the aligner. For example, in some embodiments the location may be noted as posterior, anterior, buccal, and/or lingual. In some embodiments the location may be on a tooth-by-tooth basis, such as, by identifying the particular tooth receiving cavity location as the upper left central incisor or the lower left central incisor. In some embodiments, the location may also include the buccal or lingual or occlusal surface and/or gingival line.

In some embodiments a parameter may include the material used to fabricate the physical appliance, the age of material, the moisture content of the material, the color of the material, the viscosity of material, and other material properties.

In some embodiments, a parameter may include the fabrication method used to fabricate the physical aligner. In some embodiments, a parameter may include fabrication settings for the fabrication process. Fabrication settings may include expected ambient temperature, expected material temperature, expected ambient and/or fabrication chamber humidity, expected exposure time, expected exposure wavelength, expected exposure intensity, expected nozzle temperature, expected material flow rate, expected extrusion pressure, and other expected settings of the printing process.

In some embodiments, a parameter may include cleaning settings. In some direct fabrication processes, such as SLA, after initially fabricating the appliances, excess resin or other material is removed from the printed part using a fluid bath for other means. Cleaning settings may include bath temperature, fluid type, fluid flow rate, fluid pressure, bath lighting type, cleaning force, and other cleaning parameters.

In some embodiments a parameter may include post-cure settings or postprocessing settings. In direct fabrication processes, such as SLA, after initial fabrication and cleaning, the part such as a orthodontic aligner may be subject to additional curing, storage, or other processing. In some embodiments, post-cure settings or postprocessing settings for may include ambient temperature, material temperature, exposure time, exposure wavelength, exposure intensity, nozzle temperature, material flow rate, extrusion pressure, and other settings.

In some embodiments, a parameter may also include aspects of supports that may be generated to support the aligner during the fabrication process. Supports may be fabricated during the fabrication process and then removed from the fabricated aligner. Supports may be generated to extend from a bed or plate of the fabrication machine, a first layer of a print, or from a portion of the aligner to another portion of the aligner that may otherwise be unsupported. Support parameters may include support design, such as the type of support, including lattice supports which may be vertical walls or pillars and tree supports that include trunks that extend from a base and branches that extend from the trunk to the aligner. Support parameters may also include support density, such as the number of supports per unit area, the shape of the support, and the support location.

In some embodiments, for each case run through the deviation correction preprocessor, wherein each case may be an aligner for a stage of orthodontic treatment, the deviation correction processor may alert for predictable deviations or otherwise identify predictable deviations and quantify the deviation. In addition, the deviation correction preprocessor may match clustered deviation types with a closest class of zero-deviation geometries, or near zero-deviation geometries, such as within an acceptable deviation. By using the closest class of zero deviation geometries for an identified cluster deviation type, the preprocessor may modify the geometry of the aligner to reduce or eliminate the expected deviation of the physical inner.

At block 640, the deviation correction preprocessor may generate a postprocessed model based on the pre-processing model and the parameters. In some embodiments, the postprocessed model may include information related to the expected deviation of the physical model after direct fabrication.

At block 660, the deviation correction preprocessor determines whether the expected deviation is acceptable or not. The deviation correction preprocessor may look at aspects of the postprocessed model to determine whether the deviations are acceptable or not. In some embodiments, the deviation correction preprocessor may look at aligner thickness, deviations of expected physical aligner surface locations as compared to the respective locations and the three-dimensional model. In some embodiments, the deviation correction preprocessor determines the deviations based on the expected physical part's geometric shape as compared to the desired physical parts geometric part's shape such as, as defined by the geometry of the three-dimensional digital model of the aligner.

If the deviation is acceptable, such as within a threshold of acceptable deviations, the postprocessed model or instructions for fabricating the postprocessed model may be sent to a fabrication machine for fabrication. In some embodiments, the preprocessed model may have acceptable expected deviations. In such embodiments, the preprocessed model or instructions for fabricating the preprocessed model may be sent a fabrication machine for fabrication. In some embodiments, if the deviation is unacceptable, the part may be sent back for additional correction.

At block 670, the fabrication machine fabricates the orthodontic appliance using one or more processes disclosed herein.

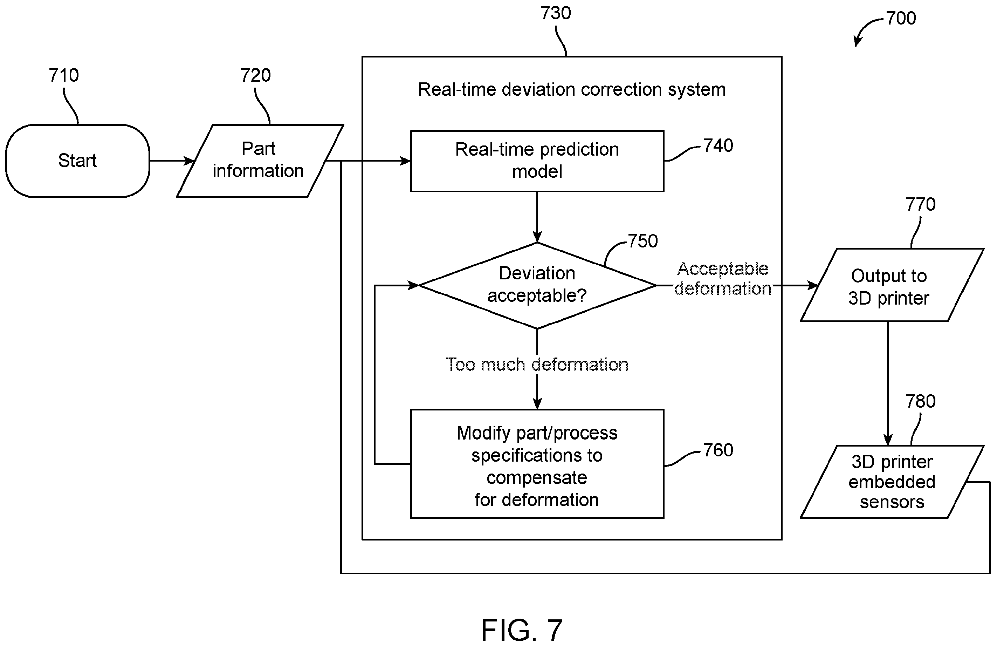

FIG. 7 shows a method 700 of real-time generation instructions for fabricating an aligner with compensation of deviations during fabrication, in accordance with embodiments discussed herein. The method 700 may start at block 710. Some or all of the method 700 may take place before or during the fabrication of an orthodontic aligner.

At block 720, part information is generated or received. The part information may be generated based on a treatment plan to move the patient's teeth from a first arrangement towards a second arrangement. The part information may include a three-dimensional model of an orthodontic aligner for a stage of a treatment plan. In some embodiments, the three-dimensional model may include slices of a three-dimensional model of the orthodontic aligner. The slices may be layers used for generating instructions for printing for directly fabricating the orthodontic aligner.

At block 730, a real-time deviation correction processor system may modify the part information. One difference between the real-time correction processor system and the deviation processors system 630, above, is that the real-time deviation correction processor system may use data received during the fabrication of the aligner, such as during the fabrication of past slices of an aligner being fabricated, in order to predict and correct deviations in future or to-be printed slices of the aligner being fabricated.

The real-time deviation correction processor may receive the part information as generated or received at block 620. The part information may be considered a preprocessed model of the aligner or other orthodontic device that has not yet been processed to compensate for potential deviations from the model that may occur during fabrication or may be a post-processed model, such as that output at block 670 of method 600. In some embodiments, the real-time deviation correction processor system may receive the slices of a digital model of the aligner. The real-time deviation correction processor may process the received model using real-time fabrication information acquired during the fabrication process. In some embodiments, the real-time fabrication information may be used in method 700 within seconds or minutes of its acquisition. In some embodiments, such as during SLA fabrication or other direction fabrication processes, the data acquired for a slice of a model being fabrication may be used by the real-time deviation correction processor system to correct the next slice to be fabricated.

The predictions can be based on analytical and/or numerical simulation technology used to generate a prediction model. In some embodiments, the prediction model may be based on partial differential equation-based models that may be solved using various techniques, such as finite element or finite volume methods. For example, by simulating the direct fabrication of the aligner. Or by data generated through past simulations of fabrications of aligners.

In some embodiments, the prediction model may be a machine learning model such as a Bayesian model, a regression model, a decision tree algorithm, or support vector machines or neural networks trained based on experimental data. The prediction models may be trained based on a comparison of the shape of previously printed orthodontic aligners or slices thereof with the shape of the three-dimensional model of the orthodontic aligners. The printed orthodontic aligners may be digitally imaged in two or three dimensions such as by CT scanning, x-ray photographic images, etc. In some embodiments, the prediction model may use clustering techniques, pattern searches, or dimension reduction, based on a comparison of previously designed and printed orthodontic aligners or slices thereof.

Building the prediction model may include identifying clusters of deviations, geometric patterns in the aligner and their associated deviations, and reduction in dimensions in order to simplify the analysis. In some embodiments, types of deviations may be clustered, using clustering techniques, and zero deviation regions of aligners may be classified based on geometric shape or other factors.

The deviation correction processor and its prediction model may use one or more parameters, which may include variables, when generating a prediction of the deviation of the fabricated aligner as compared to the digital three-dimensional model of the aligner. In some embodiments, a parameter may include an angle of the aligner. The angle may be an angle of a surface of aligner with respect to a build direction, such as an angle with respect to the build platform upon which the physical orthodontic aligner is built. In some embodiments, the angle may be an angle of a surface of the aligner with respect to a plane or axis of the aligner, such as an occlusal plane of the aligner. In some embodiments, a parameter may include the thickness of the aligner. The aligner thickness may be measured perpendicular to an exterior surface of the aligner, parallel with the build surface, perpendicular to the build surface, or with respect to a portion of the aligner itself. In some embodiments, the thickness may be thickness of the aligner from a surface of the aligner facing outward from or not part of a tooth receiving cavity to a surface of the tooth receiving cavity such as an interior surface that defines the interior shape of the tooth receiving cavity.

In some embodiments, a parameter may include a cross section aspect ratio of the aligner in a plane. In some embodiments the plane may be a plane parallel to the build surface upon which the aligner is printed or for directly fabricated, or perpendicular to a build direction, sometimes denoted as the Z direction in direct fabrication. The cross section aspect ratio may be determined based on a ratio of the longest overall length dimension of the aligner in a plane and the longest length dimension perpendicular to the longest overall length dimension. In some embodiments, the cross section aspect ratio may be of a feature of aligner rather than of the entire plane of the aligner. In direct fabrication, physical objects may be built layer by layer, sometimes called slices, each slice being generated based on a cross section of the three-dimensional model and having a thickness. The plane used to determine a cross section aspect ratio or other features in a plane may be such a slice.

In some embodiments, a parameter may include the location in an arch of the aligner. For example, in some embodiments the location may be noted as posterior, anterior, buccal, and/or lingual. In some embodiments the location may be on a tooth-by-tooth basis, such as, by identifying the particular tooth receiving cavity location as the upper left central incisor or the lower left central incisor. In some embodiments, the location may also include the buccal or lingual or occlusal surface and/or gingival line.

In some embodiments a parameter may include the material used to fabricate the physical appliance, the age of material, the moisture content of the material, the color of the material, the viscosity of material, and other material properties.

In some embodiments, a parameter may include the fabrication method used to fabricate the physical aligner. In some embodiments, a parameter may include real-time fabrication information from the fabrication process, such as gathered by embedded sensors 780. Real-time fabrication information may include real-time ambient temperature, real-time material temperature, real-time ambient and/or fabrication chamber humidity, real-time exposure time, real-time exposure wavelength, real-time exposure intensity, real-time nozzle temperature, real-time material flow rate, real-time extrusion pressure, and other real-time information.

The sensors 780 may include temperature sensors, humidity sensors, viscosity sensors, humidity sensors, pressure sensors, light sensors, and other sensors.

In some embodiments, the real-time fabrication information may include images or scans of the printed parts as they are being fabricated. Images and scans may include 2D images of the most recently printed slice with a focal plane parallel to the build platform on with the part is fabricated or 3D scan data of the part.

In some embodiments, a parameter may include cleaning settings. In some direct fabrication processes, such as SLA, after initially fabricating the appliances, excess resin or other material is removed from the printed part using a fluid bath for other means. Cleaning settings may include bath temperature, fluid type, fluid flow rate, fluid pressure, bath lighting type, cleaning force, and other cleaning parameters.

In some embodiments a parameter may include post-cure settings or postprocessing settings. In some direct fabrication processes, such as SLA, after initial fabrication and cleaning, the part such as a orthodontic aligner may be subject to additional curing, storage, or other processing. In some embodiments, post-cure settings or postprocessing settings for may include ambient temperature, material temperature, exposure time, exposure wavelength, exposure intensity, nozzle temperature, material flow rate, extrusion pressure, and other settings.

In some embodiments, for each case run through the deviation correction preprocessor, wherein each case may be an aligner for a stage of orthodontic treatment, the deviation correction processor may alert for predictable deviations or otherwise identify predictable deviations and quantify the deviation. In addition, the deviation correction preprocessor may match clustered deviation types with a closest class of zero-deviation geometries, or near zero-deviation geometries, such as within an acceptable deviation. By using the closest class of zero deviation geometries for an identified cluster deviation type, the preprocessor may modify the geometry of the aligner to reduce or eliminate the expected deviation of the physical inner.

At block 740, the real-time deviation correction preprocessor may generate a postprocessed model based on the received model and the parameters. In some embodiments, the postprocessed model may include information related to the expected deviation of the physical model after direct fabrication. In some embodiments, the post-processed model may be a model of the entire aligner while in some embodiments, the post-processed model may be a model of a slice of the aligner.

At block 750, the deviation correction preprocessor determines whether the expected deviation is acceptable or not. The deviation correction preprocessor may look at aspects of the postprocessed model to determine whether the deviations are acceptable or not. In some embodiments, the deviation correction preprocessor may look at aligner thickness, deviations of expected physical aligner surface locations as compared to the respective locations and the three-dimensional model. In some embodiments, the deviation correction preprocessor determines the deviations based on the expected physical part's geometric shape as compared to the desired physical parts geometric part's shape such as, as defined by the geometry of the three-dimensional digital model of the aligner.

If the deviation is acceptable, such as within a threshold of acceptable deviations, at block 770 the postprocessed model or instructions for fabricating the postprocessed model may be sent to a fabrication machine for fabrication. In some embodiments, the preprocessed model may have acceptable expected deviations. In such embodiments, the preprocessed model or instructions for fabricating the preprocessed model may be sent a fabrication machine for fabrication. In some embodiments, if the deviation is unacceptable, at block 760 the part or slice thereof may be sent corrected to reduce the predicted deviation.

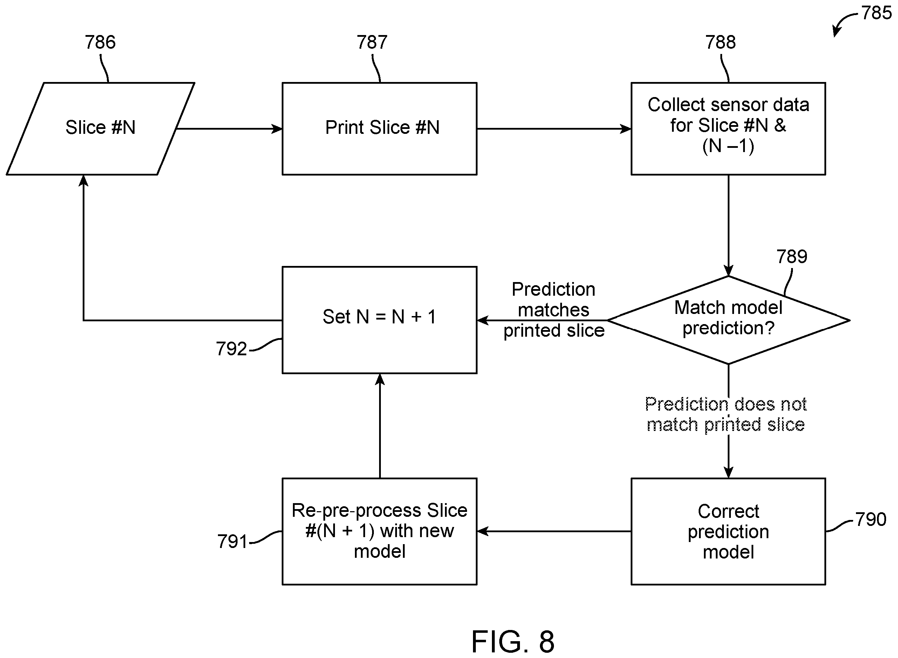

FIG. 8 shows aspects of a method 785 of real-time generation of instructions for fabricating an aligner with compensation of deviations during fabrication, in accordance with embodiments discussed herein. The method 785 may be the real-time prediction model 740 of FIG. 7.

At block 786 slice N of an appliance that is being or to be fabricated is loaded or otherwise received.

At block 787 slice N of the appliance is fabricated using one or more methods discussed herein.

At block 788 sensor data gathered during the fabrication of slice N and, in some embodiments, during the fabrication of slice N-1. The sensor data may include an image of the printed slice taken with a focal plane parallel to the plane of the slice, such as parallel to the build platform or build plane, sometimes referred to as the X-Y plane in direct fabrication. For example, for DLP-based or laser-based SLA fabrication of aligners, ambient and local temperature sensors as well as IR surface temperature sensors can be used to provide multi-dimension data to the prediction model. In addition, relative viscosity sensors can constantly monitor the viscosity of the resin during the layer-by-layer manufacturing and provide the data as an input to the prediction model.

At block 789 the printed slice is compared to the digital model of the slice loaded at block 786. If the printed slice deviates less than a predetermined amount from the geometry of the digital model of the slice, then the process proceeds to block 792 where slice N +1 is loaded. If the printed slice deviates more than a predetermined amount from the geometry of the digital model of the slice the process proceeds to block 790.

As another example for manufacturing aligners with peel-based mechanisms, wherein the peel force of the part at every layer of the process can be determined based on FEA or analytical modeling of the system and sensors, such as optical diffraction based sensors or contact-based sensors. The peel force for each layer may be determined during the printing process and if the adhesion force exceeds the design limit for that manufacturing stage, then machine parameters that influence the adhesion force can be modified real time to ensure no deflection is observed. In some emboicmetns, the adhesion force may vary as a function of layer height or layer number. The fabrication speed and exposure time of each layer can also be dynamically varied based on fabrication parameters and expected peel strength to minimize or reduce fabrication time.

At block 790 the prediction model for may be updated to correct for the actual deviation found during fabrication.

At block 791 the updated prediction model may be running on slice N+1 before it is loaded into block 786.

In some embodiments at block 790 and block 791, slice and may be reprocessed in the reprocessed slice may be reprinted. For example, deviations in the printed slice N may be corrected or repaired by reprinting the same slice N layer to increase supports, thicken certain regions of the part to mitigate distortion, order to correct or other defects or deviations.

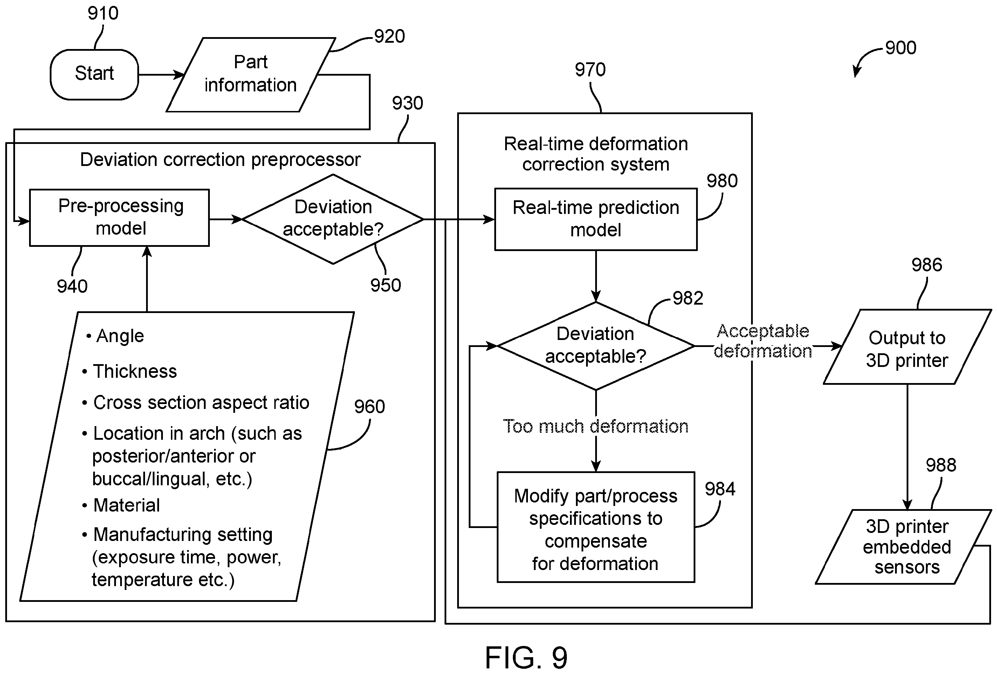

FIG. 9 shows a method 900 of real-time generation instructions for fabricating an aligner with compensation of deviations during fabrication, in accordance with embodiments discussed herein. The method 900 may incorporate some or all of methods 600, 700, and 785. The method 900 may start at block 910.

At block 920, part information is generated or received. The part information may be generated based on a treatment plan to move the patient's teeth from a first arrangement towards a second arrangement. The part information may include a three-dimensional model of an orthodontic aligner for a stage of a treatment plan. In some embodiments, the three-dimensional model may include slices of a three-dimensional model of the orthodontic aligner. The slices may be layers used for generating instructions for printing for directly fabricating the orthodontic aligner. Block 920 may also carry out aspects of block 620 and block 720, discussed herein.

At block 930, a deviation correction processor may modify the part information. Block 930 may carry out aspects of block 930. The deviation correction processor may receive the part information as generated or received at block 720. The part information may be considered a preprocessed model of the aligner or other orthodontic device that has not yet been processed to compensate for potential deviations from the model that may occur during fabrication. The deviation correction processor may process the pre-processed model 940 in order to predict the deviations of the fabricated aligner as compared to the desired geometric shape of the digital three-dimensional model of the aligner. The pre-processed model 940 may be the same as the pre-processed model 640.

The predictions can be based on analytical and/or numerical simulation technology used to generate a prediction model. In some embodiments, the prediction model may be based on partial differential equation-based models that may be solved using various techniques, such as finite element or finite volume methods. For example, by simulating the direct fabrication of the aligner. Or by data generated through past simulations of fabrications of aligners.

In some embodiments, the prediction model may be a machine learning model such as a Bayesian model, a regression model, a decision tree algorithm, or support vector machines or neural networks trained based on experimental data. The prediction models may be trained based on a comparison of the shape of previously printed orthodontic aligners with the shape of the three-dimensional model of the orthodontic aligners. The printed orthodontic aligners may be digitally imaged in two or three dimensions such as by CT scanning x-ray photographic images, etc. in some embodiments, the prediction model may use clustering techniques, pattern searches, or dimension reduction, based on a comparison of previously designed and printed orthodontic aligners. Building the prediction model may include identifying clusters of deviations, geometric patterns in the aligner and their associated deviations, and reduction in dimensions in order to simplify the analysis.

In some embodiments, types of deviations may be clustered using clustering techniques. Zero deviation regions of aligners may be classified based on geometric shape or other factors.

The deviation correction processor and a prediction model may use one or more parameters 960, which may include variables, when generating a prediction of the deviation of the fabricated aligner as compared to the digital three-dimensional model of the aligner. The parameters 960 may be the same as the parameters 650. In some embodiments, a parameter may include an angle of the aligner. The angle may be an angle of a surface of aligner with respect to a build direction, such as an angle with respect to the build platform upon which the physical orthodontic aligner is built. In some embodiments, the angle may be an angle of a surface of the aligner with respect to a plane or axis of the aligner, such as an occlusal plane of the aligner. In some embodiments, a parameter may include the thickness of the aligner. The aligner thickness may be measured perpendicular to an exterior surface of the aligner, parallel with the build surface, perpendicular to the build surface, or with respect to a portion of the aligner itself. In some embodiments, the thickness may be thickness of the aligner from a surface of the aligner facing outward from or not part of a tooth receiving cavity to a surface of the tooth receiving cavity such as an interior surface that defines the interior shape of the tooth receiving cavity.

In some embodiments, a parameter may include a cross section aspect ratio of the aligner in a plane. In some embodiments the plane may be a plane parallel to the build surface upon which the aligner is printed or for directly fabricated, or perpendicular to a build direction, sometimes denoted as the Z direction in direct fabrication. The cross section aspect ratio may be determined based on a ratio of the longest overall length dimension of the aligner in a plane and the longest length dimension perpendicular to the longest overall length dimension. In some embodiments, the cross section aspect ratio may be of a feature of aligner rather than of the entire plane of the aligner. In direct fabrication, physical objects may be built layer by layer, sometimes called slices, each slice being generated based on a cross section of the three-dimensional model and having a thickness. The plane used to determine a cross section aspect ratio or other features in a plane may be such a slice.

In some embodiments, a parameter may include the location in an arch of the aligner. For example, in some embodiments the location may be noted as posterior, anterior, buccal, and/or lingual. In some embodiments the location may be on a tooth-by-tooth basis, such as, by identifying the particular tooth receiving cavity location as the upper left central incisor or the lower left central incisor. In some embodiments, the location may also include the buccal or lingual or occlusal surface and/or gingival line.

In some embodiments a parameter may include the material used to fabricate the physical appliance, the age of material, the moisture content of the material, the color of the material, the viscosity of material, and other material properties.

In some embodiments, a parameter may include the fabrication method used to fabricate the physical aligner. In some embodiments, a parameter may include fabrication settings for the fabrication process. Fabrication settings may include expected ambient temperature, expected material temperature, expected ambient and/or fabrication chamber humidity, expected exposure time, expected exposure wavelength, expected exposure intensity, expected nozzle temperature, expected material flow rate, expected extrusion pressure, and other expected settings of the printing process.

In some embodiments, a parameter may include cleaning settings. In some direct fabrication processes, such as SLA, after initially fabricating the appliances, excess resin or other material is removed from the printed part using a fluid bath for other means. Cleaning settings may include bath temperature, fluid type, fluid flow rate, fluid pressure, bath lighting type, cleaning force, and other cleaning parameters.

In some embodiments a parameter may include post-cure settings or postprocessing settings. In direct fabrication processes, such as SLA, after initial fabrication and cleaning, the part such as a orthodontic aligner may be subject to additional curing, storage, or other processing. In some embodiments, post-cure settings or postprocessing settings for may include ambient temperature, material temperature, exposure time, exposure wavelength, exposure intensity, nozzle temperature, material flow rate, extrusion pressure, and other settings.

In some embodiments, for each case run through the deviation correction preprocessor, wherein each case may be an aligner for a stage of orthodontic treatment, the deviation correction processor may alert for predictable deviations or otherwise identify predictable deviations and quantify the deviation. In addition, the deviation correction preprocessor may match clustered deviation types with a closest class of zero-deviation geometries, or near zero-deviation geometries, such as within an acceptable deviation. By using the closest class of zero deviation geometries for an identified cluster deviation type, the preprocessor may modify the geometry of the aligner to reduce or eliminate the expected deviation of the physical inner.

At block 940, the deviation correction preprocessor may generate a postprocessed model based on the pre-processing model and the parameters. In some embodiments, the postprocessed model may include information related to the expected deviation of the physical model after direct fabrication. Block 940 may carry out aspects of block 640.

At block 950, the deviation correction preprocessor determines whether the expected deviation is acceptable or not. Block 950 may carry out aspects of block 660. The deviation correction preprocessor may look at aspects of the postprocessed model to determine whether the deviations are acceptable or not. In some embodiments, the deviation correction preprocessor may look at aligner thickness, deviations of expected physical aligner surface locations as compared to the respective locations and the three-dimensional model. In some embodiments, the deviation correction preprocessor determines the deviations based on the expected physical part's geometric shape as compared to the desired physical parts geometric part's shape such as, as defined by the geometry of the three-dimensional digital model of the aligner.

If the deviation is acceptable, such as within a threshold of acceptable deviations, the postprocessed model or instructions for fabricating the postprocessed model may be sent to a fabrication machine for fabrication and/or a real-time deformation correction system 970. In some embodiments, the preprocessed model may have acceptable expected deviations. In such embodiments, the preprocessed model or instructions for fabricating the preprocessed model may be sent a fabrication machine for fabrication. In some embodiments, if the deviation is unacceptable, the part may be sent back for additional correction.

At block 970, a real-time deviation correction processor system may modify the part information. One difference between the real-time correction processor system and the deviation processors system 930, above, is that the real-time deviation correction processor system may use data received during the fabrication of the aligner, such as during the fabrication of past slices of an aligner being fabricated, in order to predict and correct deviations in future or to-be printed slices of the aligner being fabricated. Some of all of the aspects of method 785 may be carried out by the re-time deformation correction system.

The real-time deviation correction processor may receive the part information as generated or output at block 930. The part information may be considered a preprocessed model of the aligner or other orthodontic device that has not yet been processed to compensate for potential deviations from the model that may occur during fabrication or may be a post-processed model, such as that output at block 940. In some embodiments, the real-time deviation correction processor system may receive the slices of a digital model of the aligner. The real-time deviation correction processor may process the received model using real-time fabrication information acquired during the fabrication process. In some embodiments, the real-time fabrication information may be used in method 900 within seconds or minutes of its acquisition. In some embodiments, such as during SLA fabrication or other direction fabrication processes, the data acquired for a slice of a model being fabrication may be used by the real-time deviation correction processor system to correct the next slice to be fabricated.

The predictions can be based on analytical and/or numerical simulation technology used to generate a prediction model. In some embodiments, the prediction model may be based on partial differential equation-based models that may be solved using various techniques, such as finite element or finite volume methods. For example, by simulating the direct fabrication of the aligner. Or by data generated through past simulations of fabrications of aligners.

In some embodiments, the prediction model may be a machine learning model such as a Bayesian model, a regression model, a decision tree algorithm, or support vector machines or neural networks trained based on experimental data. The prediction models may be trained based on a comparison of the shape of previously printed orthodontic aligners or slices thereof with the shape of the three-dimensional model of the orthodontic aligners. The printed orthodontic aligners may be digitally imaged in two or three dimensions such as by CT scanning, x-ray photographic images, etc. In some embodiments, the prediction model may use clustering techniques, pattern searches, or dimension reduction, based on a comparison of previously designed and printed orthodontic aligners or slices thereof.

Building the prediction model may include identifying clusters of deviations, geometric patterns in the aligner and their associated deviations, and reduction in dimensions in order to simplify the analysis. In some embodiments, types of deviations may be clustered, using clustering techniques, and zero deviation regions of aligners may be classified based on geometric shape or other factors.

The deviation correction processor and its prediction model may use one or more parameters, which may include variables, when generating a prediction of the deviation of the fabricated aligner as compared to the digital three-dimensional model of the aligner. In some embodiments, a parameter may include an angle of the aligner. The angle may be an angle of a surface of aligner with respect to a build direction, such as an angle with respect to the build platform upon which the physical orthodontic aligner is built. In some embodiments, the angle may be an angle of a surface of the aligner with respect to a plane or axis of the aligner, such as an occlusal plane of the aligner. In some embodiments, a parameter may include the thickness of the aligner. The aligner thickness may be measured perpendicular to an exterior surface of the aligner, parallel with the build surface, perpendicular to the build surface, or with respect to a portion of the aligner itself. In some embodiments, the thickness may be thickness of the aligner from a surface of the aligner facing outward from or not part of a tooth receiving cavity to a surface of the tooth receiving cavity such as an interior surface that defines the interior shape of the tooth receiving cavity.

In some embodiments, a parameter may include a cross section aspect ratio of the aligner in a plane. In some embodiments the plane may be a plane parallel to the build surface upon which the aligner is printed or for directly fabricated, or perpendicular to a build direction, sometimes denoted as the Z direction in direct fabrication. The cross section aspect ratio may be determined based on a ratio of the longest overall length dimension of the aligner in a plane and the longest length dimension perpendicular to the longest overall length dimension. In some embodiments, the cross section aspect ratio may be of a feature of aligner rather than of the entire plane of the aligner. In direct fabrication, physical objects may be built layer by layer, sometimes called slices, each slice being generated based on a cross section of the three-dimensional model and having a thickness. The plane used to determine a cross section aspect ratio or other features in a plane may be such a slice.

In some embodiments, a parameter may include the location in an arch of the aligner. For example, in some embodiments the location may be noted as posterior, anterior, buccal, and/or lingual. In some embodiments the location may be on a tooth-by-tooth basis, such as, by identifying the particular tooth receiving cavity location as the upper left central incisor or the lower left central incisor. In some embodiments, the location may also include the buccal or lingual or occlusal surface and/or gingival line.

In some embodiments a parameter may include the material used to fabricate the physical appliance, the age of material, the moisture content of the material, the color of the material, the viscosity of material, and other material properties.

In some embodiments, a parameter may include the fabrication method used to fabricate the physical aligner. In some embodiments, a parameter may include real-time fabrication information from the fabrication process, such as gathered by embedded sensors 988. Real-time fabrication information may include real-time ambient temperature, real-time material temperature, real-time ambient and/or fabrication chamber humidity, real-time exposure time, real-time exposure wavelength, real-time exposure intensity, real-time nozzle temperature, real-time material flow rate, real-time extrusion pressure, and other real-time information.

The sensors 988 may include temperature sensors, humidity sensors, viscosity sensors, humidity sensors, pressure sensors, light sensors, and other sensors.

In some embodiments, the real-time fabrication information may include images or scans of the printed parts as they are being fabricated. Images and scans may include 2D images of the most recently printed slice with a focal plane parallel to the build platform on with the part is fabricated or 3D scan data of the part.

In some embodiments, a parameter may include cleaning settings. In some direct fabrication processes, such as SLA, after initially fabricating the appliances, excess resin or other material is removed from the printed part using a fluid bath for other means. Cleaning settings may include bath temperature, fluid type, fluid flow rate, fluid pressure, bath lighting type, cleaning force, and other cleaning parameters.

In some embodiments a parameter may include post-cure settings or postprocessing settings. In some direct fabrication processes, such as SLA, after initial fabrication and cleaning, the part such as a orthodontic aligner may be subject to additional curing, storage, or other processing. In some embodiments, post-cure settings or postprocessing settings for may include ambient temperature, material temperature, exposure time, exposure wavelength, exposure intensity, nozzle temperature, material flow rate, extrusion pressure, and other settings.

In some embodiments, for each case run through the deviation correction preprocessor, wherein each case may be an aligner for a stage of orthodontic treatment, the deviation correction processor may alert for predictable deviations or otherwise identify predictable deviations and quantify the deviation. In addition, the deviation correction preprocessor may match clustered deviation types with a closest class of zero-deviation geometries, or near zero-deviation geometries, such as within an acceptable deviation. By using the closest class of zero deviation geometries for an identified cluster deviation type, the preprocessor may modify the geometry of the aligner to reduce or eliminate the expected deviation of the physical inner.

At block 980, the real-time deviation correction preprocessor may generate a postprocessed model based on the received model and the parameters. In some embodiments, the postprocessed model may include information related to the expected deviation of the physical model after direct fabrication. In some embodiments, the post-processed model may be a model of the entire aligner while in some embodiments, the post-processed model may be a model of a slice of the aligner.

At block 982, the deviation correction preprocessor determines whether the expected deviation is acceptable or not. The deviation correction preprocessor may look at aspects of the postprocessed model to determine whether the deviations are acceptable or not. In some embodiments, the deviation correction preprocessor may look at aligner thickness, deviations of expected physical aligner surface locations as compared to the respective locations and the three-dimensional model. In some embodiments, the deviation correction preprocessor determines the deviations based on the expected physical part's geometric shape as compared to the desired physical parts geometric part's shape such as, as defined by the geometry of the three-dimensional digital model of the aligner.

If the deviation is acceptable, such as within a threshold of acceptable deviations, at block 986 the postprocessed model or instructions for fabricating the postprocessed model may be sent to a fabrication machine for fabrication. In some embodiments, the preprocessed model may have acceptable expected deviations. In such embodiments, the preprocessed model or instructions for fabricating the preprocessed model may be sent a fabrication machine for fabrication. In some embodiments, if the deviation is unacceptable, at block 984 the part or slice thereof may be sent corrected to reduce the predicted deviation.

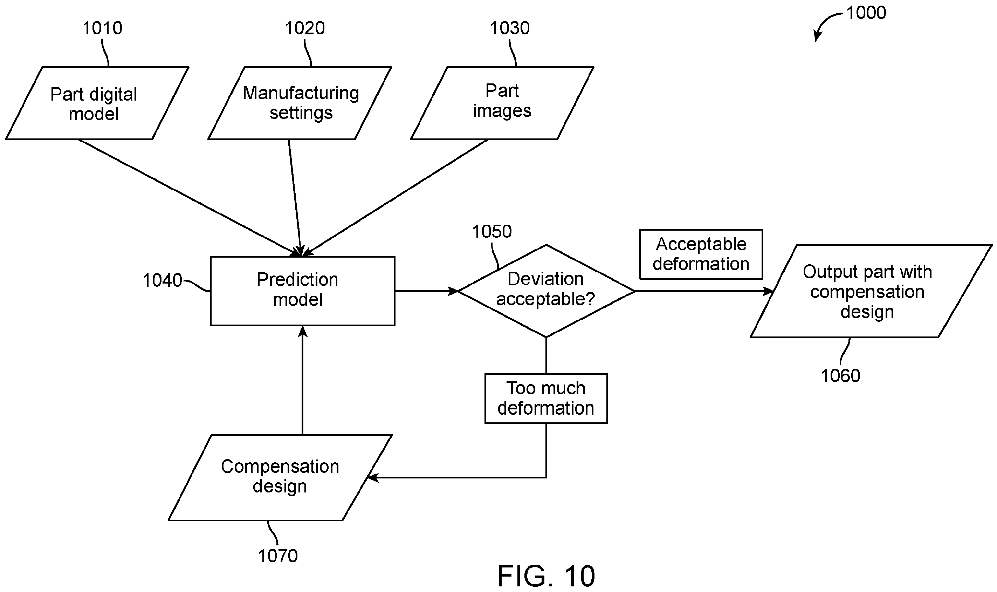

FIG. 10 shows a method 1000 of generating instructions for fabricating an aligner with compensation of deviations during fabrication, in accordance with embodiments discussed herein.

At block 1040 a prediction model is used to predict the deviation of a fabricated aligner or aligner slice as compared to a desired aligner shape or a 3D digital model of the aligner shape. The prediction model may be developed based on past experience. For example, the model may be built using digital models of an aligner 1010, manufacturing settings for fabricating the digital model 1020, and images or three-dimensional models of the fabricated aligner 1030.

The digital model 1010 be generated based on a treatment plan to move the patient's teeth from a first arrangement towards a second arrangement. The model 1010 may include a three-dimensional model of an orthodontic aligner for a stage of a treatment plan. In some embodiments, the three-dimensional model may include slices of a three-dimensional model of the orthodontic aligner. The slices may be layers used for generating instructions for printing for directly fabricating the orthodontic aligner.

The manufacturing settings 1020 may include settings for fabrication of the aligner and/or data gathered during the fabrication of the aligner, such as described above with respect to FIGS. 6, 7, 8, and 9.

The images or three-dimensional digital modes of the physical fabricated aligner 1030 may be images, 3D scan data, or other data related to the physical geometry of the fabricated aligner, as discussed herein, and may includes, for example, data generated by a scanning or photographing device, such as, for example, CT scanning, photography, OCT, and optical scanning, and the post-processing of the scans and images. The imaging system may be used to take scans or photos of aligners and other appliances. The scans can be 3D scans or 2D photos representing the projection of the 3D image.

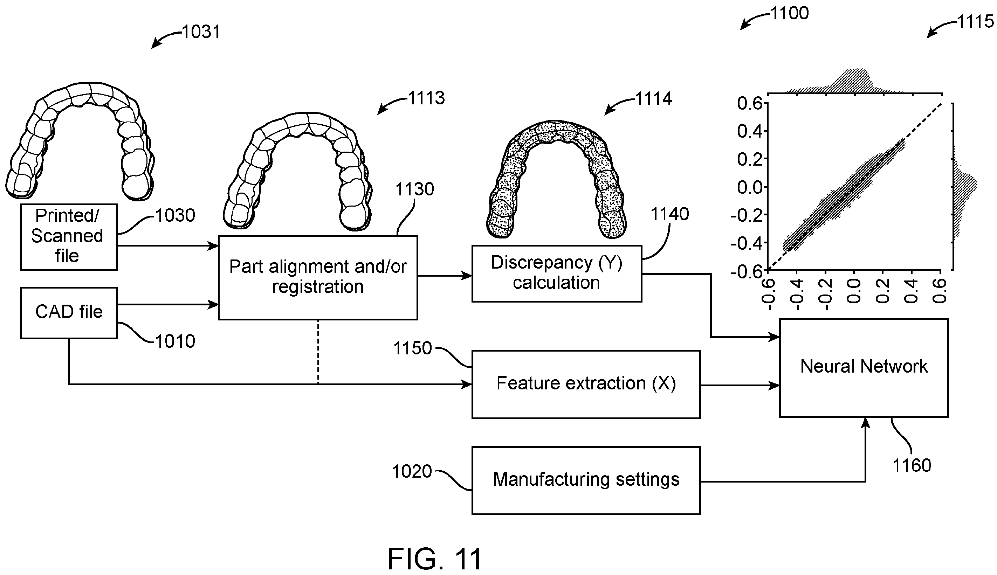

The prediction model 1040, which may be a model of the aligner generated based on a compensation model, such as a neural network developed as shown in FIG 11.

At block 1130, the model 1010 and the images of the fabricated aligner 1030, depicted as image 1031 are aligned or registered with each other. The images or models may be registered based on, for example, the midline of the arch and/or the occlusal surface of the arch. Image 1113 shows the two models registered to each other. At block 1120, a discrepancy or deviation of the geometry of the physical part 1030 with respect to the geometry of the model 1010 is determined. The registration can capture the global distortion of the appliance, such as shrinkage, bending, and twisting of the ends of the arches, etc. Other quantities such as fillets, geometrical mismatch in attachment wells and interproximal regions, and thickness distribution, etc. can also be captured or measured based on the model and registration thereof. The comparison results may be stored in a database for use in training a neural network.

Image 1114 shows a displacement map of the deviations between the physical part and the digital model.

At block 1150, geometric features are extracted from the model 1010, as discussed herein.

At block 1160, a machine learning or empirical models may be used to correlate the geometric mismatch of the digital model and the physical part. the neural network is trained using, as input, the discrepancy or deviation of the models, as derived from the images 1010 and the data representing the physical part 1030, the extracted features, and the manufacturing settings 1020. The may also or additionally correlate the geometric mismatch with some measurements from the digital model and production information, including local coordinates, local curvatures, dentition measurements, printers, manufacturing settings, such as exposure time, power, temperature, etc. as discussed herein. The models can then be used to predict the shape of produced appliance given a new digital model.

Voxel and pixel based additive manufacturing techniques rely on the use of discrete voxels or pixels as inputs to deposit material or deliver energy for the respective manufacturing process. Often, geometric compensations may not translate into physical change in dimensions because those optimizations may to be continuous, while the input to effect the change, such as turning on or off a voxel for fabricating the physical model are often discrete and may vary, for example, only when the compensated change varies by at least 50% or enough to cause a voxel or pixel to be printed or not printed. Therefore, the change in voxel or pixel space may also be captured.

The neural network of other means of generating a compensation design may impart a reverse distortion in the digital model of the aligner so that the produce aligner has a smaller deviation from the original digital model than would have occurred before the compensation. For empirical models, the compensation distortions could be calculated back directly from empirical functions generated based on the previously fabricated models.

For machine learning model, a reverse learning model is built up by using a series of compensation distortions as the input of the prediction model, and then finding the compensation distortions with the least deviation. The compensation distortions with the least deviation can then be used to re-train the compensation machine learning model.

Image 1115 depicts a neural network correlation of discrepancy calculations on the Y axis with feature extractions on the X axis of a trained model.

Referring back to FIG. 10, at block 1040 the compensation model (machine learning based or empirical) may be used to generate a compensated 3D model that is then used as the predicted model for the fabricated part. At block 750, it is determined whether the predicted deviation is acceptable or not. Aspects of the model may be evaluated to determine whether the deviations are acceptable or not. In some embodiments, the aspects include aligner thickness, deviations of expected physical aligner surface locations as compared to the respective locations and the three-dimensional model. In some embodiments, aspects include the expected physical part's geometric shape as compared to the desired physical parts geometric part's shape such as, as defined by the geometry of the three-dimensional digital model of the aligner.

If the deviation is acceptable, such as within a threshold of acceptable deviations, at block 1060 the model or instructions for fabricating the model may be sent to a fabrication machine for fabrication. In some embodiments, if the deviation is unacceptable, at block 1050 the part or slice thereof may be sent to be corrected to reduce the predicted deviation at block 1070 where further compensations are applied to the model and then the further compensated model is used at input to the compensation model and the process repeats itself until an acceptable deviation is reached.

The compensation model may be used for example, with respect to aligner thickness. Aligners may have a thickness distribution other than uniform in the digital model, such as thick occlusal surfaces while being thin at the gingival edge. A machine learning model may be trained to correlate the thickness with a measurement or measurements, such as thickness as a function of location or coordinates on the aligner (coord), the z or occlusal-buccal component of the surface normal direction (z) at the coord, and the local curvature (r) at the coord. Such in the form Thickness = f (coord, normal_z, r). From this function, a compensation in the model may be made, for example, to make the occlusal surface thinner while the bottom edge thicker, so the printed aligner will have a more uniform thickness distribution.

### Computing System

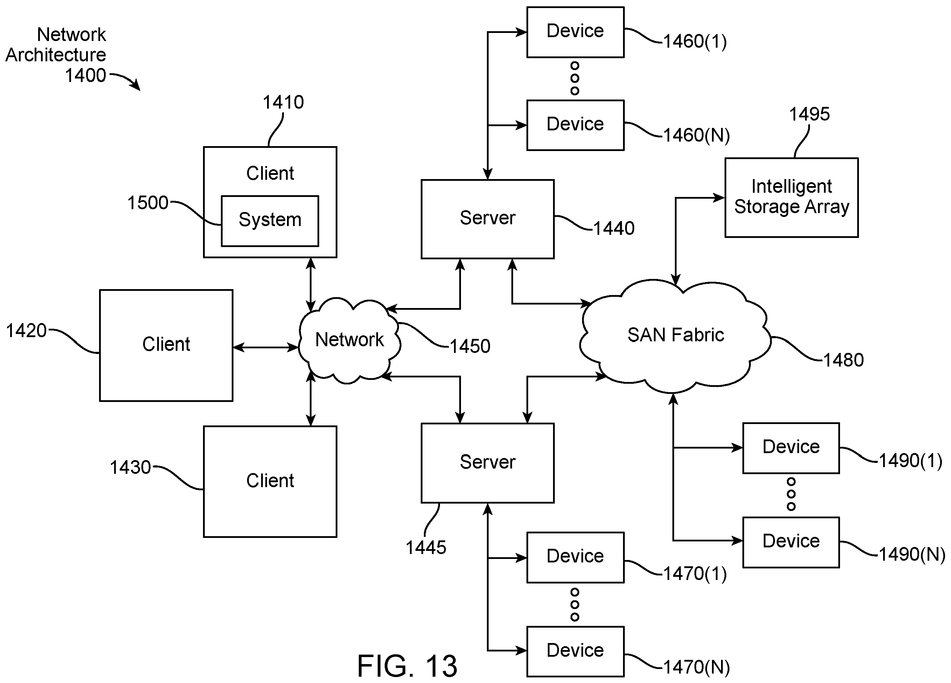

FIG. 13 is a block diagram of an example computing system 1310 capable of implementing one or more of the embodiments described and/or illustrated herein. For example, all or a portion of computing system 1310 may perform and/or be a means for performing, either alone or in combination with other elements, one or more of the steps described herein (such as one or more of the steps illustrated in FIGS. 4-11. All or a portion of computing system 1310 may also perform and/or be a means for performing any other steps, methods, or processes described and/or illustrated herein.

Computing system 1310 broadly represents any single or multi-processor computing device or system capable of executing computer-readable instructions. Examples of computing system 1310 include, without limitation, workstations, laptops, client-side terminals, servers, distributed computing systems, handheld devices, or any other computing system or device. In its most basic configuration, computing system 1310 may include at least one processor 1314 and a system memory 1316.

Processor 1314 generally represents any type or form of physical processing unit (e.g., a hardware-implemented central processing unit) capable of processing data or interpreting and executing instructions. In certain embodiments, processor 1314 may receive instructions from a software application or module. These instructions may cause processor 1314 to perform the functions of one or more of the example embodiments described and/or illustrated herein.

System memory 1316 generally represents any type or form of volatile or non-volatile storage device or medium capable of storing data and/or other computer-readable instructions. Examples of system memory 1316 include, without limitation, Random Access Memory (RAM), Read Only Memory (ROM), flash memory, or any other suitable memory device. Although not required, in certain embodiments computing system 1310 may include both a volatile memory unit (such as, for example, system memory 1316) and a non-volatile storage device (such as, for example, primary storage device 1332, as described in detail below).

In some examples, system memory 1316 may store and/or load an operating system 1340 for execution by processor 1314. In one example, operating system 1340 may include and/or represent software that manages computer hardware and software resources and/or provides common services to computer programs and/or applications on computing system 1310. Examples of operating system 1340 include, without limitation, LINUX, JUNOS, MICROSOFT WINDOWS, WINDOWS MOBILE, MAC OS, APPLE'S IOS, UNIX, GOOGLE CHROME OS, GOOGLE'S ANDROID, SOLARIS, variations of one or more of the same, and/or any other suitable operating system.

In certain embodiments, example computing system 1310 may also include one or more components or elements in addition to processor 1314 and system memory 1316. For example, as illustrated in FIG. 13, computing system 1310 may include a memory controller 1318, an Input/Output (I/O) controller 1320, and a communication interface 1322, each of which may be interconnected via a communication infrastructure 1312. Communication infrastructure 1312 generally represents any type or form of infrastructure capable of facilitating communication between one or more components of a computing device. Examples of communication infrastructure 1312 include, without limitation, a communication bus (such as an Industry Standard Architecture (ISA), Peripheral Component Interconnect (PCI), PCI Express (PCIe), or similar bus) and a network.

Memory controller 1318 generally represents any type or form of device capable of handling memory or data or controlling communication between one or more components of computing system 1310. For example, in certain embodiments memory controller 1318 may control communication between processor 1314, system memory 1316, and I/O controller 1320 via communication infrastructure 1312.

I/O controller 1320 generally represents any type or form of module capable of coordinating and/or controlling the input and output functions of a computing device. For example, in certain embodiments I/O controller 1320 may control or facilitate transfer of data between one or more elements of computing system 1310, such as processor 1314, system memory 1316, communication interface 1322, display adapter 1326, input interface 1330, and storage interface 1334.

As illustrated in FIG. 13, computing system 1310 may also include at least one display device 1324 coupled to I/O controller 1320 via a display adapter 1326. Display device 1324 generally represents any type or form of device capable of visually displaying information forwarded by display adapter 1326. Similarly, display adapter 1326 generally represents any type or form of device configured to forward graphics, text, and other data from communication infrastructure 1312 (or from a frame buffer, as known in the art) for display on display device 1324.

As illustrated in FIG. 13, example computing system 1310 may also include at least one input device 1328 coupled to I/O controller 1320 via an input interface 1330. Input device 1328 generally represents any type or form of input device capable of providing input, either computer or human generated, to example computing system 1310. Examples of input device 1328 include, without limitation, a keyboard, a pointing device, a speech recognition device, variations or combinations of one or more of the same, and/or any other input device.

Additionally or alternatively, example computing system 1310 may include additional I/O devices. For example, example computing system 1310 may include I/O device 1336. In this example, I/O device 1336 may include and/or represent a user interface that facilitates human interaction with computing system 1310. Examples of I/O device 1336 include, without limitation, a computer mouse, a keyboard, a monitor, a printer, a modem, a camera, a scanner, a microphone, a touchscreen device, variations or combinations of one or more of the same, and/or any other I/O device.

Communication interface 1322 broadly represents any type or form of communication device or adapter capable of facilitating communication between example computing system 1310 and one or more additional devices. For example, in certain embodiments communication interface 1322 may facilitate communication between computing system 1310 and a private or public network including additional computing systems. Examples of communication interface 1322 include, without limitation, a wired network interface (such as a network interface card), a wireless network interface (such as a wireless network interface card), a modem, and any other suitable interface. In at least one embodiment, communication interface 1322 may provide a direct connection to a remote server via a direct link to a network, such as the Internet. Communication interface 1322 may also indirectly provide such a connection through, for example, a local area network (such as an Ethernet network), a personal area network, a telephone or cable network, a cellular telephone connection, a satellite data connection, or any other suitable connection.

In certain embodiments, communication interface 1322 may also represent a host adapter configured to facilitate communication between computing system 1310 and one or more additional network or storage devices via an external bus or communications channel. Examples of host adapters include, without limitation, Small Computer System Interface (SCSI) host adapters, Universal Serial Bus (USB) host adapters, Institute of Electrical and Electronics Engineers (IEEE) 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 1322 may also allow computing system 1310 to engage in distributed or remote computing. For example, communication interface 1322 may receive instructions from a remote device or send instructions to a remote device for execution.

In some examples, system memory 1316 may store and/or load a network communication program 1338 for execution by processor 1314. In one example, network communication program 1338 may include and/or represent software that enables computing system 1310 to establish a network connection 1342 with another computing system (not illustrated in FIG. 13) and/or communicate with the other computing system by way of communication interface 1322. In this example, network communication program 1338 may direct the flow of outgoing traffic that is sent to the other computing system via network connection 1342. Additionally or alternatively, network communication program 1338 may direct the processing of incoming traffic that is received from the other computing system via network connection 1342 in connection with processor 1314.

Although not illustrated in this way in FIG. 13, network communication program 1338 may alternatively be stored and/or loaded in communication interface 1322. For example, network communication program 1338 may include and/or represent at least a portion of software and/or firmware that is executed by a processor and/or Application Specific Integrated Circuit (ASIC) incorporated in communication interface 1322.

As illustrated in FIG. 13, example computing system 1310 may also include a primary storage device 1332 and a backup storage device 1333 coupled to communication infrastructure 1312 via a storage interface 1334. Storage devices 1332 and 1333 generally represent any type or form of storage device or medium capable of storing data and/or other computer-readable instructions. For example, storage devices 1332 and 1333 may be a magnetic disk drive (e.g., a so-called hard drive), a solid state drive, a floppy disk drive, a magnetic tape drive, an optical disk drive, a flash drive, or the like. Storage interface 1334 generally represents any type or form of interface or device for transferring data between storage devices 1332 and 1333 and other components of computing system 1310.

In certain embodiments, storage devices 1332 and 1333 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 1332 and 1333 may also include other similar structures or devices for allowing computer software, data, or other computer-readable instructions to be loaded into computing system 1310. For example, storage devices 1332 and 1333 may be configured to read and write software, data, or other computer-readable information. Storage devices 1332 and 1333 may also be a part of computing system 1310 or may be a separate device accessed through other interface systems.

Many other devices or subsystems may be connected to computing system 1310. Conversely, all of the components and devices illustrated in FIG. 13 need not be present to practice the embodiments described and/or illustrated herein. The devices and subsystems referenced above may also be interconnected in different ways from that shown in FIG. 13. Computing system 1310 may also employ any number of software, firmware, and/or hardware configurations. For example, one or more of the example embodiments disclosed herein may be encoded as a computer program (also referred to as computer software, software applications, computer-readable instructions, or computer control logic) on a computer-readable medium.

The term "computer-readable medium," as used herein, generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The computer-readable medium containing the computer program may be loaded into computing system 1310. All or a portion of the computer program stored on the computer-readable medium may then be stored in system memory 1316 and/or various portions of storage devices 1332 and 1333. When executed by processor 1314, a computer program loaded into computing system 1310 may cause processor 1314 to perform and/or be a means for performing the functions of one or more of the example embodiments described and/or illustrated herein. Additionally or alternatively, one or more of the example embodiments described and/or illustrated herein may be implemented in firmware and/or hardware. For example, computing system 1310 may be configured as an Application Specific Integrated Circuit (ASIC) adapted to implement one or more of the example embodiments disclosed herein.

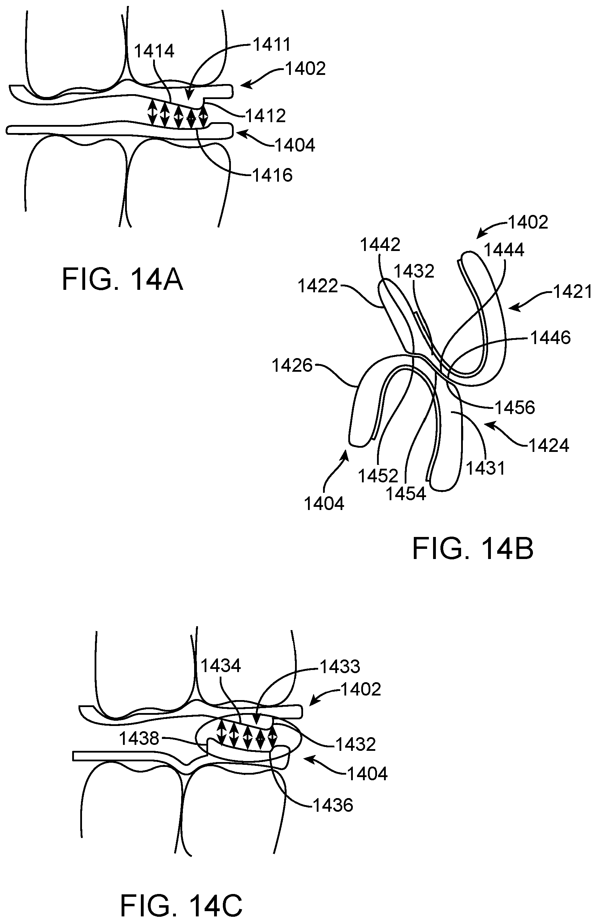

FIG. 14 is a block diagram of an example network architecture 1400 in which client systems 1410, 1420, and 1430 and servers 1440 and 1445 may be coupled to a network 1450. As detailed above, all or a portion of network architecture 1400 may perform and/or be a means for performing, either alone or in combination with other elements, one or more of the steps disclosed herein (such as one or more of the steps illustrated in FIG. 4-11). All or a portion of network architecture 1400 may also be used to perform and/or be a means for performing other steps and features set forth in the instant disclosure.

Client systems 1410, 1420, and 1430 generally represent any type or form of computing device or system, such as example computing system 1310 in FIG. 13. Similarly, servers 1440 and 1445 generally represent computing devices or systems, such as application servers or database servers, configured to provide various database services and/or run certain software applications. Network 1450 generally represents any telecommunication or computer network including, for example, an intranet, a WAN, a LAN, a PAN, or the Internet. In one example, client systems 1410, 1420, and/or 1430 and/or servers 1440 and/or 1445 may include all or a portion of system 500 from FIG. 5.

As illustrated in FIG. 14, one or more storage devices 1460(1)-(N) may be directly attached to server 1440. Similarly, one or more storage devices 1470(1)-(N) may be directly attached to server 1445. Storage devices 1460(1)-(N) and storage devices 1470(1)-(N) generally represent any type or form of storage device or medium capable of storing data and/or other computer-readable instructions. In certain embodiments, storage devices 1460(1)-(N) and storage devices 1470(1)-(N) may represent Network-Attached Storage (NAS) devices configured to communicate with servers 1440 and 1445 using various protocols, such as Network File System (NFS), Server Message Block (SMB), or Common Internet File System (CIFS).

Servers 1440 and 1445 may also be connected to a Storage Area Network (SAN) fabric 1480. SAN fabric 1480 generally represents any type or form of computer network or architecture capable of facilitating communication between a plurality of storage devices. SAN fabric 1480 may facilitate communication between servers 1440 and 1445 and a plurality of storage devices 1490(1)-(N) and/or an intelligent storage array 1495. SAN fabric 1480 may also facilitate, via network 1450 and servers 1440 and 1445, communication between client systems 1410, 1420, and 1430 and storage devices 1490(1)-(N) and/or intelligent storage array 1495 in such a manner that devices 1490(1)-(N) and array 1495 appear as locally attached devices to client systems 1410, 1420, and 1430. As with storage devices 1460(1)-(N) and storage devices 1470(1)-(N), storage devices 1490(1)-(N) and intelligent storage array 1495 generally represent any type or form of storage device or medium capable of storing data and/or other computer-readable instructions.

In certain embodiments, and with reference to example computing system 1310 of FIG. 13, a communication interface, such as communication interface 1322 in FIG. 13, may be used to provide connectivity between each client system 1410, 1420, and 1430 and network 1450. Client systems 1410, 1420, and 1430 may be able to access information on server 1440 or 1445 using, for example, a web browser or other client software. Such software may allow client systems 1410, 1420, and 1430 to access data hosted by server 1440, server 1445, storage devices 1460(1)-(N), storage devices 1470(1)-(N), storage devices 1490(1)-(N), or intelligent storage array 1495. Although FIG. 14 depicts the use of a network (such as the Internet) for exchanging data, the embodiments described and/or illustrated herein are not limited to the Internet or any particular network-based environment.

In at least one embodiment, all or a portion of one or more of the example embodiments disclosed herein may be encoded as a computer program and loaded onto and executed by server 1440, server 1445, storage devices 1460(1)-(N), storage devices 1470(1)-(N), storage devices 1490(1)-(N), intelligent storage array 1495, or any combination thereof. All or a portion of one or more of the example embodiments disclosed herein may also be encoded as a computer program, stored in server 1440, run by server 1445, and distributed to client systems 1410, 1420, and 1430 over network 1450.

As detailed above, computing system 1310 and/or one or more components of network architecture 1400 may perform and/or be a means for performing, either alone or in combination with other elements, one or more steps of an example method for virtual care.

FIGS. 14A, 14B, and 14C depict occlusal stability features, such as bite blocks or bite ramps, generated using thickness maps. FIG. 14A shows an example of a bite block 1411 and corresponding bite block receiving cavity 1416 that may aid in stabilizing a patient's bite when using orthodontic aligners. A patient's natural bite in occlusion is determined by the location and orientation of the patient's teeth and how the teeth of the lower jaw interact with the teeth of the upper jaw along with the structure of the temporomandibular joint, also referred to as the TMJ joint.

Orthodontic aligners have a thickness that changes the way the teeth of the patient's upper jaw and lower jaw interact in occlusion. This thickness may change the way the patient's upper jaw and lower jaw interact and cause discomfort to the patient. In some embodiments, the changes in the patient's occlusion may cause changes to the patient's TMJ joint. In order to address the potential for a patient's discomfort, the occlusal surfaces of the orthodontic aligners may be altered in order to promote a stable bite and to increase patient comfort.

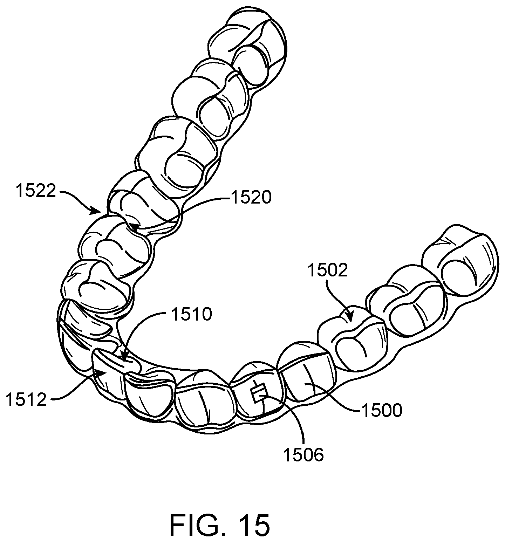

In some embodiments, a set of generated models of orthodontic aligners may be modified to include a bite block 1411 and corresponding bite block receiving cavity 1416 that may aid in stabilizing a patient's bite when using orthodontic aligners. The bite block 1411 may be a structure that extends from an occlusal surface of an aligner 1402, such as the upper aligner of a set of orthodontic aligners. The bite block 1410 may be generated by altering a thickness map of the orthodontic aligner 1402. An aligner thickness map is discussed in more detail with herein respect to FIG. 15.

In some embodiments, the bite block 1411may be a bite ramp. A bite ramp may include a ramped surface 1414 wherein the alterations to the thickness map of the aligner change with respect to the location on the aligner. For example, to form a ramp as shown in FIG. 14A, locations of the aligner that are more posterior have been altered with smaller increases in the thickness while locations more anterior have been altered with increased thicknesses. In some embodiments, the transition from little to no change in thickness to the maximum change in thickness may be linear such that a ramp 1414 is formed on the occlusal surface of the aligner 1402. In some embodiments, a step shapes such as step shape 1412 is formed at an end of the bite ramp where the thickness of the aligner changes quickly from the maximum height of the bite ramp back to the originally generated thickness of the aligner. The change may be a step change. In some embodiments the change may be at a slope that is steeper or greater than the slope of the ramp 1414.

In some embodiments, a bite block receiving cavity 1416 may be formed in opposing aligner 1404 of a set of aligners. A bite block receiving cavity may include a ramped surface that corresponds to the ramp surface 1414 wherein the alterations to the thickness map of the aligner change with respect to the location on the aligner. For example, to form a ramp in a bite block receiving cavity 1416 as shown in FIG. 14A, locations of the aligner that are more posterior have been altered with smaller decreases in the thickness while locations more anterior have been altered with greater decreases in thicknesses. In some embodiments, the transition from little to no change in thickness to the maximum change in thickness may be linear such that a slope of the ramp of the bite block receiving cavity 1416 matches a slope of the ramp 1414. In some embodiments, shapes such as a step shape is formed at an end of the bite ramp where the thickness of the aligner changes quickly from the maximum decrease in height of the bite ramp receiving cavity back to the originally generated thickness of the aligner. The change may be a step change or a smooth change. In some embodiments the change may be at a slope that is steeper or greater than the slope of the ramp of the bite block receiving cavity. In some embodiments, the shape of the bite block receiving cavity corresponds to the shape of the bite block 1411 such that the bite block 1411 nestingly mates with the bite block receiving cavity 1416.

The thickness of the aligner in the bite block receiving cavity may be reduced to zero such that a hole is formed in the aligner.

In some embodiments, the thickness of the aligner in the shape of the bite blocks may be determined based on simulation of the patient's jaw in occlusion. For example, a simulation may be used to determine the contacts between the upper and lower jaw during each stage of orthodontic treatment and the bite blocks may be generated for each stage of the orthodontic treatment in order to stabilize the patient's bite. In some embodiments the location size, shape, and other features of the bite blocks and bite block receiving cavities may be changed at each stage of treatment in order to facilitate a stabilized bite for the patient.

FIG. 14B shows an example of thickness mapping alterations in order to provide for a more comfortable and natural occlusion for a patient. FIG. 14B shows upper and lower anterior teeth such as central incisors in occlusion while wearing modified orthodontic aligners 1402, 1404. In such embodiments, the initial thickness of the aligners 1402, 1404 may be such that the natural occlusion between the patient's into your teeth would be uncomfortable. Accordingly, the thickness maps of the aligners 1402, 1404 in the vicinity of occlusion between the patient's upper aligner 1402 and lower aligner 1404 may be changed to provide a more natural occlusion.

While the changes to the thickness map discussed with reference to FIGS. 14A and 14C formed a bite block and corresponding bite block receiving cavity, in some embodiments, such as on occlusal or incisal services of incisors and other anterior teeth, the thickness map may be modified by reducing the thickness in both the upper aligner and the lower aligner to provide for closer occlusion between the teeth and jaws of the patient.

With reference to FIG. 14B, in some embodiments, a set of generated models of orthodontic aligners may be modified to include a first reduced thickness section 1432 and corresponding second reduced thickness 1432 that may aid in stabilizing a patient's bite and provided a more natural closer occlusion when wearing orthodontic aligners. The first reduced thickness section 1432 may be a portion of the aligner 1402, such as the upper aligner of a set of orthodontic aligners. The first reduced thickness section 1432 may be generated by altering a thickness map of the orthodontic aligner 1404. An aligner thickness map is discussed in more detail with herein respect to FIG. 15.

In some embodiments, the first reduced thickness section 1432 may be a reduced surface thickness wherein the alterations to the thickness map of the aligner change with respect to the location on the aligner. The first reduced thickness section 1432 may include three portions, a first central portion 1444, a second portion 1442 that is on a lingual side 1422 of the first portion 1444, and a third portion 1446 that is on a buccal side 1421 of the central portion 1444.

In some embodiments, the second or lingual portion 1442 and the third or buccal portion 1456 may be transition zones that transition a thickness from a reduced thickness or minimum thickness within the first zone 1444 and the initially generated thickness of the aligner 1402 outside of the first reduced thickness section 1432. A thickness map for the first central portion 1444 may be reduced to a first minimum thickness. The thickness of the first central portion 1444 may be a constant thickness that follows a contour of the tooth receiving cavity or internal surface of the aligner at that tooth location. In some embodiments, the total desired distance between the upper tooth and the lower tooth may be determined or set. The minimum thickness of the aligner at the first central portion 1444 may be half the minimum distance between the upper tooth and the lower tooth. In some embodiments, the thickness map of the first central portion 1444 may be chosen to maintain the desired occlusion between lower and upper jaws and adjusted to match or mate with, such as nestingly mate with the shape of the aligner 1404 or tooth of the opposing jaw.

In some embodiments, the second or lingual portion 1442 may extend from a location of a previously generated thickness of the aligner on a lingual side of the first central portion 1444 to the first central portion 1444. A thickness map for the second or lingual portion 1442 may be a first minimum thickness at the interface between the first central portion 1444 and the second or lingual portion 1442. A thickness map for the second or lingual portion 1442 may be a first maximum thickness at the interface between the first central portion 1444 and the location of a previously generated thickness of the aligner. The thickness of the second or lingual portion 1442 may be a variable thickness that follows a contour of an external surface shape of the portion 1452 of an opposing aligner. The thickness of the second or lingual portion 1442 may be a variable thickness that changes linearly from the thickness at the previously generated thickness of the aligner and the thickness at the interface between the first central portion 1444 and the second or lingual portion 1442. In some embodiments, the thickness map of the first central portion 1444 and the second or lingual portion 1442 may be chosen to maintain the desired occlusion between lower and upper jaws and adjusted to match or mate with, such as nestingly mate with the shape of the portion 1431 of the aligner 1404 or tooth of the opposing jaw such that the shape of the shape of the portion 1431 matches the shape of the portion 1432 to allow the surfaces to mate with each other.

In some embodiments, the third or buccal portion 1456 may extend from a location of a previously generated thickness of the aligner on a lingual side of the first central portion 1444 to the first central portion 1444. A thickness map for the second or lingual portion 1442 may be a first minimum thickness at the interface between the first central portion 1444 and the second or lingual portion 1442. A thickness map for the second or lingual portion 1442 may be a first maximum thickness at the interface between the first central portion 1444 and the location of a previously generated thickness of the aligner. The thickness of the second or lingual portion 1442 may be a variable thickness that follows a contour of an external surface shape of the portion 1431 of an opposing aligner. The thickness of the second or lingual portion 1442 may be a variable thickness that changes linearly from the thickness at the previously generated thickness of the aligner and the thickness at the interface between the first central portion 1444 and the second or lingual portion 1442. In some embodiments, the thickness map of the first central portion 1444 and the second or lingual portion 1442 may be chosen to maintain the desired occlusion between lower and upper jaws and adjusted to match or mate with, such as nestingly mate with the shape of the portion 1452 of the aligner 1404 or tooth of the opposing jaw such that the shape of the shape of the portion 1431 matches the shape of the portion 1432 to allow the surfaces to mate with each other.

In some embodiments, the thickness map of the corresponding second reduced thickness 1431 of aligner 1404 may aid in stabilizing a patient's bite and provide a more natural closer occlusion when wearing orthodontic aligners. The second reduced thickness section 1431 may be a portion of the aligner 1404, such as the lower aligner of a set of orthodontic aligners. The second reduced thickness section 1431 may be generated by altering a thickness map of the orthodontic aligner 1404. An aligner thickness map is discussed in more detail with herein respect to FIG. 15.

In some embodiments, the second reduced thickness section 1432 may be a reduced surface thickness wherein the alterations to the thickness map of the aligner change with respect to the location on the aligner. The first reduced thickness section 1431 may include three portions, a first central portion 1454, a second portion 1452 that is on a lingual side 1426 of the first portion 1454, and a third portion 1456 that is on a buccal side of the central portion 1454.

In some embodiments, the second or lingual portion 1452 and the third or buccal portion 1456 may be transition zones that transition a thickness from a reduced thickness or minimum thickness within the first zone 1454 and the previously generated thickness of the aligner 1404 outside of the first reduced thickness section 1456. A thickness map for the first central portion 1454 may be reduced to a first minimum thickness. The thickness of the first central portion 1454 may be a constant thickness that follows a contour of the tooth receiving cavity or internal surface of the aligner at that tooth location. In some embodiments, the total desired distance between the upper tooth and the lower tooth may be determined or set. The minimum thickness of the aligner at the first central portion 1454 may be half the minimum distance between the upper tooth and the lower tooth. In some embodiments, the thickness map of the first central portion 1454 may be chosen to maintain the desired occlusion between lower and upper jaws and adjusted to match or mate with, such as nestingly mate with the shape of the aligner 1402 or tooth of the opposing jaw.

In some embodiments, the second or lingual portion 1452 may extend from a location of a previously generated thickness of the aligner on a lingual side of the first central portion 1454 to the first central portion 1454. A thickness map for the second or lingual portion 1452 may be a first minimum thickness at the interface between the first central portion 1454 and the second or lingual portion 1452. A thickness map for the second or lingual portion 1452 may be a first maximum thickness at the interface between the first central portion 1454 and the location of a previously generated thickness of the aligner. The thickness of the second or lingual portion 1452 may be a variable thickness that follows a contour of an external surface shape of the portion 1442 of an opposing aligner. The thickness of the second or lingual portion 1452 may be a variable thickness that changes linearly from the thickness at the previously generated thickness of the aligner and the thickness at the interface between the first central portion 1454 and the second or lingual portion 1452. In some embodiments, the thickness map of the first central portion 1454 and the second or lingual portion 1452 may be chosen to maintain the desired occlusion between lower and upper jaws and adjusted to match or mate with, such as nestingly mate with the shape of the portion 1432 of the aligner 1402 or tooth of the opposing jaw.

In some embodiments, the third or buccal portion 1456 may extend from a location of a previously generated thickness of the aligner on a lingual side of the first central portion 1454 to the first central portion 1454. A thickness map for the second or lingual portion 1452 may be a first minimum thickness at the interface between the first central portion 1454 and the second or lingual portion 1452. A thickness map for the second or lingual portion 1452 may be a first maximum thickness at the interface between the first central portion 1454 and the location of a previously generated thickness of the aligner. The thickness of the second or lingual portion 1452 may be a variable thickness that follows a contour of an external surface shape of the portion 1432 of an opposing aligner. The thickness of the second or lingual portion 1452 may be a variable thickness that changes linearly from the thickness at the previously generated thickness of the aligner and the thickness at the interface between the first central portion 1454 and the second or lingual portion 1452. In some embodiments, the thickness map of the first central portion 1454 and the second or lingual portion 1452 may be chosen to maintain the desired occlusion between lower and upper jaws and adjusted to match or mate with, such as nestingly mate with the shape of the portion 1452 of the aligner 1402 or tooth of the opposing jaw.

In some embodiments, a doctor may prefer to provide some disocclusion between the patient's upper jaw and lower jaw. In some embodiments, such as during tooth eruption or tooth extraction wherein the tooth is pulled out or away from the gingiva in order to adjust its height, contact between the patient's upper jaw and lower jaw may inhibit the increase in height of the tooth or inhibit eruption of the tooth. In such embodiments, discipline may aid in decreasing or eliminating occlusal forces at the location of the tooth whose height is being increased.

A patient's natural bite in occlusion is determined by the location and orientation of the patient's teeth and how the teeth of the lower jaw interact with the teeth of the upper jaw along with the structure of the temporomandibular joint, also referred to as the TMJ. In some embodiments, the seclusion of the job may aid in altering the structure of the patient's TMJ in order to change the patient's bite.

FIG. 14C shows an example of a bite block 1433 and corresponding bite block receiving cavity 1436 that may aid in disoccluding the patient's jaw and stabilizing a patient's bite when using orthodontic aligners.

In some embodiments, a set of generated models of orthodontic aligners may be modified to include a bite block 1433 and corresponding bite block receiving cavity 1436 that may aid in disoccluding the patient's jaw and stabilizing a patient's bite when using orthodontic aligners. The bite block 1433 may be a structure that extends from an occlusal surface of an aligner 1402, such as the upper aligner of a set of orthodontic aligners. The bite block 1433 may be generated by altering a thickness map of the orthodontic aligner 1402. An aligner thickness map is discussed in more detail with herein respect to FIG. 15.

In some embodiments, the bite block 1433 may be a bite ramp. A bite ramp may include a ramped surface 1434 wherein the alterations to the thickness map of the aligner change with respect to the location on the aligner. For example, to form a ramp as shown in FIG. 14C, locations of the aligner that are more posterior have been altered with smaller increases in the thickness while locations more anterior have been altered with increased thicknesses. In some embodiments, the transition from little to no change in thickness to the maximum change in thickness may be linear such that a ramp 1434 is formed on the occlusal surface of the aligner 1402. In some embodiments, step shapes such as step shape 1432 is formed at an end of the bite ramp where the thickness of the aligner changes quickly from the maximum height of the bite ramp back to the originally generated thickness of the aligner. The change may be a step change. In some embodiments the change may be at a slope that is steeper or greater than the slope of the ramp 1434.

In some embodiments, a bite block receiving cavity 1436 may be formed in opposing aligner 1404 of a set of aligners. A bite block receiving cavity may include a ramped surface that corresponds to the ramp surface 1434 wherein the alterations to the thickness map of the aligner change with respect to the location on the aligner. For example, to form a ramp in a bite block receiving cavity 1436 as shown in FIG. 14C, locations of the aligner that are more posterior have been altered with smaller decreases in the thickness while locations more anterior have been altered with greater decreases in thicknesses. In some embodiments, the transition from little to no change in thickness to the maximum change in thickness may be linear such that a slope of the ramp of the bite block receiving cavity 1436 matches a slope of the ramp 1434. In some embodiments, a step shapes such as step shape is formed at an end of the bite ramp where the thickness of the aligner changes quickly from the maximum decrease in height of the bite ramp receiving cavity back to the originally generated thickness of the aligner. The change may be a step change. In some embodiments the change may be at a slope that is steeper or greater than the slope of the ramp of the bite block receiving cavity. In some embodiments, the shape of the bite block receiving cavity corresponds to the shape of the bite block 1433 such that the bite block 1433 nestingly mates with the bite block receiving cavity 1436.

In some embodiments, an additional height 1438 may be added to either the bite block receiving cavity 1436 or the bite block 1434. The additional height 1438 may be the fixed height to cause occlusion of the patient's jaw. For example, if a dentist asks for a 1 mm occlusion between the upper jaw and of our job, then 1 mm in thickness may be added to the thickness map at the bite block receiving cavity 1438. The total change in the thickness map may be a some of the added thickness to provide the occlusion and the subtracted thickness to provide the bite block receiving 1436. Similarly, if the additional height 1438 is added to the bite block 1434 then the additional height 1438 may be the sum of the increased height to provide disocclusion and the increased height to form the bite block or bite ramp.

FIG. 15 depicts a thickness map 1500 of an aligner. A thickness map may be a map of locations on an aligner and a corresponding thickness of the aligner at those locations. In some embodiments, the aligner can be generated as a three-dimensional model of a solid part with the actual aligner geometry, which already contains the thickness information, such as a solid 3D digital model. a three-dimensional model of a solid part with the actual aligner geometry is generated, the changes to the thickness may be changes to the thickness of the solid part, such as a change or moving of the external surface of the three-dimensional model of a solid part with the actual aligner geometry to change the thickness of the aligner. Throughout this disclosure, references to modifications to a solid model may be made instead of modifications to a thickness map. In some embodiments, a thickness map, such as thickness map 1500, may be a two-dimensional shell mesh or mesh of shell elements and a corresponding thickness map for each element or each node at a three-dimensional location in space. In some embodiments, each element corresponds to a location on the aligner. The thickness may be a value that corresponds to the thickness of the aligner at that node or element. In some embodiments, the two-dimensional shell mesh or mesh of shell elements and a corresponding thickness map for each element or each node at a three-dimensional location in space may be a two-dimensional shell mesh or mesh of shell elements that represent the shape of an inner surface of the aligner, such as the tooth facing surface of the aligner. The thickness may be a thickness originated at the inner surface.

In some embodiments, the thickness may be a thickness centered about the location of the element wherein half the thickness is on one side of the element such as in a direction away from the aligner for tooth receiving cavity defined by the aligner and half the thicknesses on another side of the element such as a direction towards or into the tooth receiving cavity defined by the aligner. In some embodiments a thickness at a location or element may be both a thickness and a displacement from the location of the shell element. For example, in some embodiments, the thickness of the aligner at a location may be displaced from the three-dimensional location in space of the shell element or location of the aligner. In such embodiments, the displacement may provide for an additional gap or space between the teeth and the inner surface of the aligner when the aligner is worn by the patient or the displacement may provide for reducing a gap or space between the teeth and the inner surface of the aligner when the aligner is worn by the patient.

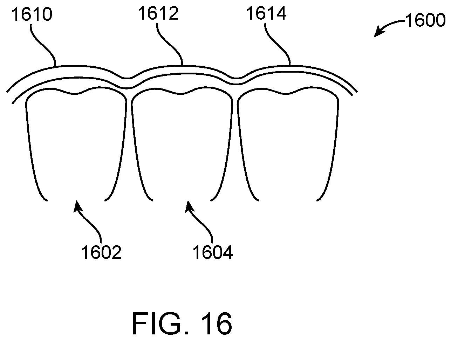

As discussed herein, the thickness map 1500 of the aligner may be adjusted in many ways. For example, an occlusal map of the occlusal surface 1502 of the aligner may be adjusted or modified to provide more or less space between an occlusal surface of the patient's teeth and the aligner when the aligner is worn by the patient, for example as shown and described with respect to FIG. 16. In some embodiments, an occlusal surface 1502 may be adjusted or modified to provide bite blocks or bite ramps on occlusal surfaces of the patient aligner and corresponding bite block or bite block receiving cavities to adjust a patient's bite in occlusion or to provide for patient comfort and stability of the patient's bite during orthodontic treatment.

In some embodiments, the thickness map 1500 of the aligner may be adjusted at incisor locations 1510, 1512 which may be lingual locations 1510 and/or buccal locations 1512. The thickness map may be adjusted at incisor locations 1510, 1512 to provide for improved occlusion between the patient's upper and lower jaws. For example, as shown and described with respect to FIG. 14B.

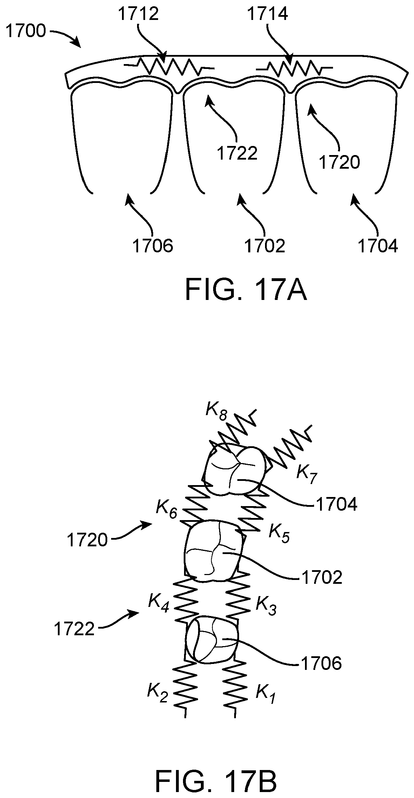

In some embodiments, the thickness map 1500 of the aligner may be adjusted at occlusal locations proximate the interproximal region between two adjacent teeth. For example, the thickness map may be adjusted at buccal locations 1522 of interproximal locations between two adjacent teeth and at lingual locations 1520 of interproximal locations between two adjacent teeth. The thickness map 1500 may be adjusted at the interproximal locations 1520, 1522 adjust the stiffness of the aligner in the occlusal and interproximal regions in order to provide better locking of the aligner to the patient's teeth, such as to better retain the aligner on the dentition, to provide better attachment to anchor teeth teeth, or teeth that are not moving, to adjust the activation energy to move the teeth, or to encourage or hinder rotation of the teeth, as described herein with respect to FIGS. 16, 17A and 17B.

FIG. 16 depicts a cross section of an occlusal portion of an aligner generated using thickness maps for intruding or extruding teeth, over respective teeth of a patient. In the embodiment shown in FIG. 16, a tooth 1602 is being intruded into the patient's jaw while tooth 1604 may be extruded out from the patient's jaw. The thickness maps 1610, 1612, 1614 may be adjusted to provide for greater intrusion force, less contact or force on the teeth, or to provide stiffness to the aligner.

The tooth 1602 may be intruded into the patient's jaw because it protrudes crossed an occlusal plane of the patient's jaw and causes premature contact with the patient's opposing jaw. The occlusal surface of the aligner may be thickened at the location 1610 corresponding to the occlusal surface of the aligner above the occlusal surface of the patient's tooth 1602. Thickening the occlusal surface of the aligner above the patient's tooth 1602 may provide for greater active intrusive force on the tooth. The force imparted on the tooth may be a function of many variables such as the local stiffness of the aligner, which may be influenced by the thickness of aligner, the displacement of the surface of the aligner at the tooth, such as how much the aligner deforms when it comes into contact with the tooth, and other factors. Increasing the thickness of the aligner at the location 1610 may increase the local stiffness of the aligner proximate the tooth 1602. Thickening the aligner in a direction away from the tooth may increase the local stiffness of the aligner proximate the tooth 1602 without increasing the deformation of the aligner the location proximate the tooth. Thickening the aligner in a direction towards the tooth may increase the deformation of the aligner when the aligner is placed on the patient's teeth and thereby increase the force on the patient's tooth.

The tooth 1604 may be extruded from the patient's jaw because it is an erupting permanent tooth that is replacing a deciduous (or baby) tooth. The occlusal surface of the aligner may be thinned at the location 1612 corresponding to the occlusal surface of the aligner above the occlusal surface of the patient's tooth 1604. Thinning the occlusal surface of the aligner above the patient's tooth 1604 may provide room for the tooth to extrude and may also reduce a force on the tooth 1604 as compared to a standard or previously generated thickness of the aligner. As discussed herein, the force imparted on the tooth may be a function of many variables such as the local stiffness of the aligner, which may be influenced by the thickness of aligner, the displacement of the surface of the aligner at the tooth, such as how much the aligner deforms when it comes into contact with the tooth, and other factors. Decreasing the thickness of the aligner at the location 1612 at a location offset from the location or shell element of the aligner in a direction away from the tooth 1604 or tooth receiving cavity that received the tooth 1604 may decrease the local stiffness of the aligner proximate the tooth 1604 and provide space within the tooth receiving cavity for the tooth to erupt.

In some embodiments, an occlusal surface adjacent to a tooth that is erupting, being extruded, or be intruded may be thickened for thinned in order to adjust the distribution of the intrusion force, provide room for the erupting tooth and/or to reduce the force that may be applied to an erupting tooth.

FIG. 17A and 17B depict a cross section of occlusal and interproximal portions of an aligner 1700 generated using thickness maps and a model of interproximal forces imparted by the aligner 1700. The thickness maps of occlusal interproximal locations 1712, 1714 may be altered to adjust the thickness of the occlusal interproximal locations in order to alter the function of the aligner. For example, the thickness of occlusal interproximal locations may be increased to aid in locking in active teeth in order to provide better aligner retention and tooth retention on other teeth of the aligner. In some embodiments, the thickness of the occlusal interproximal portions of the aligner may be thinned in order to reduce the activation energy of the aligner and provide easier movement of the patient's tooth 1702. In some embodiments, the occlusal interproximal locations may be thickened and thinned asymmetrically with respect to the buccal and lingual sides in order to increase or decrease rotational forces of the patient's teeth.

The changes in the thickness of the aligner may be represented by changes in stiffness of the aligner. The stiffness may be represented by springs 1720, 1722 and also denoted K₁ through K₈. A higher stiffness indicates a stiffer location on the aligner and a lower stiffness indicates a less stiff location, such as a compliant location on the aligner.

In some embodiments, in order to lock tooth 1702 to the aligner, the interproximal locations 1712 and 1714 may be thickened on both the occlusal and buccal sides. Thickening the interproximal locations 1712, 1714 on both the occlusal and buccal sides of the teeth between the tooth 1702 and the immediately anterior to 1704 and between the tooth 1702 and the immediately posterior tooth 1706 may act to lock tooth 1702. An inactive tooth may be a tooth that is not intended to be moved during a particular stage of treatment. In some embodiments an inactive tooth may be considered an anchoring tooth. Locking the aligner around an anchoring tooth may provide for better retention of the aligner as a whole and facilitate more reliable force delivery to neighbors. Providing better aligner retention about active teeth, such as teeth that are being moved during the stage of treatment may allow the aligner to provide more predictable movement forces on the tooth and may also prevent the aligner from inadvertently falling off the teeth of the patient.

In some embodiments, higher flexibility and/or reduced stiffness of an aligner may reduce the activation energy of the aligner and reduce the forces applied to the tooth. The activation energy may be considered as the energy to move the tooth due to the deflection of the appliance onto the dentition. By selectively reducing the activation energy of the appliance more overall retention may be achieved by reducing the distortion of the aligner as compared to the original thickness, which may also aid in reducing disengagement of the aligner off the teeth.

The activation energy of the aligner between teeth 1706 and 1702 for example may be reduced by reducing the thickness of the aligner at the occlusal interproximal location 1712. Similarly, the activation energy of the aligner between teeth 1702 and 1704 may be reduced by thinning the activation region at the occlusal interproximal locations 1714.

In some embodiments, it may be desirable to increase or decrease the thickness in the occlusal interproximal regions in order to encourage or hinder location of a tooth. For example, thickening the occlusal interproximal regions 1712 on the lingual side represented by spring K₃ and 1714 on the buccal side represented by spring K₆ while reducing or thinning the occlusal interproximal regions 1712 on the buccal side represented by spring K₄ and 1714 on the lingual side represented by spring K₅ may encourage counterclockwise rotation of the tooth 1702 and may hinder or resist clockwise rotation of the tooth 1702.

In some embodiments, thinning the occlusal interproximal regions 1712 on the lingual side represented by spring K₃ and 1714 on the buccal side represented by spring K₆ while thickening the occlusal interproximal regions 1712 on the buccal side represented by spring K₄ and 1714 on the lingual side represented by spring K₅ may encourage clockwise rotation of the tooth 1702 and may hinder or resist counterclockwise rotation of the tooth 1702.

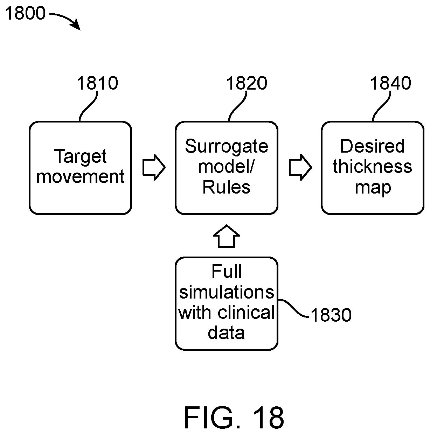

FIG. 18 depicts a method 1800 of generating and adjusting the distribution of forces and generating a thickness map.

At block 1810 a target tooth movement is determined. The tooth movement may be determined based on a treatment plan or a stage of the treatment plan. The treatment plan may have been generated based on the process shown and described with respect to FIG. 4 and elsewhere herein. In some embodiments, the target movement may be a modified movement that modifies the movement of a tooth in the treatment plan or a stage of the treatment plan.

At block 1830 a simulation to calculate the force and optimize the aligner shape for target tooth movement is performed. the simulation may include a finite element model of both the patient's anatomy including the teeth, gums, jawbone, and other anatomy along with clinical data, and the aligner may be used to simulate the movement of teeth. Using the finite element models and the target movement which may include a direction and distance or a rotational direction and rotational distance or angle the simulation may determine a modification to the thickness map of the aligner to optimize the force system for desired movement of the tooth. In some embodiments, the simulation may determine a desired thickness map to improve the movement of the tooth by improve the force system, such as to increase the movement of the two during a stage of treatment.

In some embodiments, an input to the simulation may also include an indication of a tooth and a type of movement. The simulation may use the indicated tooth and type of movement in order to simulate appropriate changes the thickness map, such as altering the thickness of the interproximal occlusal surface in order to reduce the activation energy of the aligner, to increase or decrease rotation through asymmetric stiffness changes, or to improve locking of teeth and to provide improved retention of the aligner such as discussed with respect to FIGS. 17A and 17B.

In some embodiments, the simulation may determine an alteration of the thickness of occlusal surfaces in order to improve the stability and comfort of the patient's jaw in occlusion, such as shown and described with respect to FIGS. 14A, 14b, and 14C.

In some embodiments, the simulation may determine an alteration of the thickness of occlusal surfaces in order to improve the extrusion or intrusion of one or more teeth of a patient, such as shown and described with respect to FIG. 16.

The full simulation such as one that uses finite element models and clinical data may be time-consuming when used to generate thickness maps for each patient and potentially for each stage of the treatment plan for each patient. In some embodiments, a surrogate model for moving the tooth may be used to generate a modified thickness map of the aligner to affect the movement of the patient's teeth.

At block 1820 a surrogate model for moving tooth, based on the full simulation, may be used to determine a force and aligner shape to affect the tooth movement. A surrogate model used to simulate tooth movement may be based on or more full finite element models discussed with respect to block 1830. A surrogate model may be a simplified model of the aligner and patient anatomy system. The surrogate model may be an optimization and simplification of the finite element model. A surrogate model may mimic the behavior of a simulation while being computationally cheaper to evaluate. Surrogate model may be generated based on data derived from a finite element model based on modeling the response of the finite element model to a limited number of data points such as a limited number of forces and directions. In some embodiments the surrogate model may be generated using response surface methodology to generate a polynomial model that approximates the behavior of a finite element model. Other surrogate model types may include kriging; more generalized Bayesian approaches, gradient-enhanced kriging (GEK), radial basis function, support vector machines, space mapping, artificial neural networks, and Bayesian networks.

At block 1840 a desired thickness map is generated based on the model. A desired thickness map may be an output of the simulation or modeling of blocks 1820, 1830. The modified thickness map may be modified as described above with respect to FIGS. 14-17.

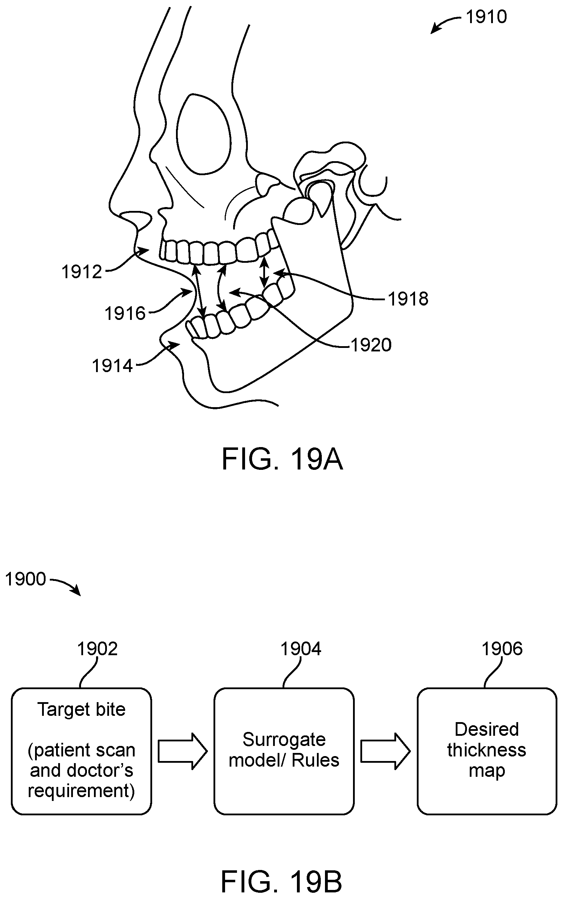

FIG. 19A depicts a disoccluded patient's jaw. In some embodiments, an occlusal thickness map may be modified to control the articulation of the lower jaw in order to increase comfort or to disocclude the jaws using the appliances to address joint issues and the patient. The patient's lower jaw 1914 may be disoccluded from the patient's upper jaw 1912 based on desired distances 1916, 1918 and/or angles 1920 between the lower jaw 1914 and the upper jaw 1912.

Disoccluding a patient's lower jaw 1914 from the patient's upper jaw 1912 may include generating a thickness map that extends the occlusal surface of the patient's upper or lower aligners in order to set the patient's jaw at the desired distances 1916, 1918 and/or angles 1920 in occlusion. One or more portions of the occlusal surfaces may have an increased thickness. In some embodiments, forces caused by the patient's chart in occlusion due to the increased occlusal thicknesses may cause undesirable forces on the patient's teeth that may inhibit or alter the movement of the patient's teeth. In some embodiments, the location of the increased occlusal thicknesses may be determined such that forces imparted on those locations of the occlusal surface are distributed in a manner to mitigate undesirable forces on the patient's teeth. For example, increased occlusal forces at locations where the tooth is being extruded or erupting may cause undesirable intrusion forces on the erupting or extruding teeth.

In some embodiments, locations of increased occlusal pressure may cause discomfort to the patient. A thickness map of the patient's occlusal services may be adjusted in order to provide a more even pressure across the patient's teeth. For example, the pressure and any tooth may be no more than 30% greater than the pressure of any other tooth subject to the occlusal forces imparted by disoccluding the patient jaws. In some embodiments, the amount of disclosure and provided by the modifications to the thickness map and is generated by simulation may provide for tolerance for manufacturing errors and tooth motion. In some embodiments, the thickness map may include thicknesses at a location or element on the occlusal surface that is no more than one half the desired distance between the upper and lower occlusal surfaces of the patient's jaws.

FIG. 19B depicts a method 1900 for generating a thickness map for disoccluding a patient's jaw. At block 1902 a target bite in occlusion is determined. The target bite may be a target distance between points on the occlusal services of the patient's arch and/or a target angle between the upper and lower arches. The target occlusion then be used as an input at block 1904.

At block 1904 a surrogate model for achieving the target bite in occlusion is used to determine a desired thickness map. A surrogate model for achieving the target bite in occlusion, which may be based on a full simulation, may be used to determine an occlusal surface thickness map to achieve the target bite. A surrogate model used to simulate an occlusal surface to achieve the target bite may be based on or more full finite element models. The surrogate model may be a simplified model of the aligner and patient anatomy system. The surrogate model may be an optimization and simplification of the finite element model. A surrogate model may mimic the behavior of a simulation while being computationally cheaper to evaluate. Surrogate model may be generated based on data derived from a finite element model based on modeling the response of the finite element model to a limited number of data points such as a limited number of forces and directions. In some embodiments the surrogate model may be generated using response surface methodology to generate a polynomial model that approximates the behavior of a finite element model. Other surrogate model types may include kriging; more generalized Bayesian approaches, gradient-enhanced kriging (GEK), radial basis function, support vector machines, space mapping, artificial neural networks, and Bayesian networks.

A more detailed simulation to determine the force and aligner shape to achieve the target occlusal bite may include a finite element model of both the patient's anatomy including the teeth, gums, jawbone, and other anatomy along with clinical data, and the aligner may be used to simulate the movement of jaws. Using the finite element models and the target bite, the simulation may determine a modification to the thickness map of the aligner to achieve the target bite.

At block 1906 a desired thickness map for occlusal surfaces of aligners is determined based on the surrogate model. The thickness map may include thicknesses at each location or shell element location on the occlusal services of the aligners in order to achieve the target bite occlusion.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered example in nature since many other architectures can be implemented to achieve the same functionality.

In some examples, all or a portion of the example systems disclosed herein may represent portions of a cloud-computing or network-based environment. Cloud-computing environments may provide various services and applications via the Internet. These cloud-based services (e.g., software as a service, platform as a service, infrastructure as a service, etc.) may be accessible through a web browser or other remote interface. Various functions described herein may be provided through a remote desktop environment or any other cloud-based computing environment.

In various embodiments, all or a portion of example systems disclosed herein may facilitate multi-tenancy within a cloud-based computing environment. In other words, the software modules described herein may configure a computing system (e.g., a server) to facilitate multi-tenancy for one or more of the functions described herein. For example, one or more of the software modules described herein may program a server to enable two or more clients (e.g., customers) to share an application that is running on the server. A server programmed in this manner may share an application, operating system, processing system, and/or storage system among multiple customers (i.e., tenants). One or more of the modules described herein may also partition data and/or configuration information of a multi-tenant application for each customer such that one customer cannot access data and/or configuration information of another customer.

According to various embodiments, all or a portion of example systems disclosed herein may be implemented within a virtual environment. For example, the modules and/or data described herein may reside and/or execute within a virtual machine. As used herein, the term "virtual machine" generally refers to any operating system environment that is abstracted from computing hardware by a virtual machine manager (e.g., a hypervisor). Additionally or alternatively, the modules and/or data described herein may reside and/or execute within a virtualization layer. As used herein, the term "virtualization layer" generally refers to any data layer and/or application layer that overlays and/or is abstracted from an operating system environment. A virtualization layer may be managed by a software virtualization solution (e.g., a file system filter) that presents the virtualization layer as though it were part of an underlying base operating system. For example, a software virtualization solution may redirect calls that are initially directed to locations within a base file system and/or registry to locations within a virtualization layer.

In some examples, all or a portion of example systems disclosed herein may represent portions of a mobile computing environment. Mobile computing environments may be implemented by a wide range of mobile computing devices, including mobile phones, tablet computers, e-book readers, personal digital assistants, wearable computing devices (e.g., computing devices with a head-mounted display, smartwatches, etc.), and the like. In some examples, mobile computing environments may have one or more distinct features, including, for example, reliance on battery power, presenting only one foreground application at any given time, remote management features, touchscreen features, location and movement data (e.g., provided by Global Positioning Systems, gyroscopes, accelerometers, etc.), restricted platforms that restrict modifications to system-level configurations and/or that limit the ability of third-party software to inspect the behavior of other applications, controls to restrict the installation of applications (e.g., to only originate from approved application stores), etc. Various functions described herein may be provided for a mobile computing environment and/or may interact with a mobile computing environment.

In addition, all or a portion of example systems disclosed herein may represent portions of, interact with, consume data produced by, and/or produce data consumed by one or more systems for information management. As used herein, the term "information management" may refer to the protection, organization, and/or storage of data. Examples of systems for information management may include, without limitation, storage systems, backup systems, archival systems, replication systems, high availability systems, data search systems, virtualization systems, and the like.

In some embodiments, all or a portion of example systems disclosed herein may represent portions of, produce data protected by, and/or communicate with one or more systems for information security. As used herein, the term "information security" may refer to the control of access to protected data. Examples of systems for information security may include, without limitation, systems providing managed security services, data loss prevention systems, identity authentication systems, access control systems, encryption systems, policy compliance systems, intrusion detection and prevention systems, electronic discovery systems, and the like.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the example embodiments disclosed herein.

As described herein, the computing devices and systems described and/or illustrated herein broadly represent any type or form of computing device or system capable of executing computer-readable instructions, such as those contained within the modules described herein. In their most basic configuration, these computing device(s) may each comprise at least one memory device and at least one physical processor.

The term "memory" or "memory device," as used herein, generally represents any type or form of volatile or non-volatile storage device or medium capable of storing data and/or computer-readable instructions. In one example, a memory device may store, load, and/or maintain one or more of the modules described herein. Examples of memory devices comprise, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In addition, the term "processor" or "physical processor," as used herein, generally refers to any type or form of hardware-implemented processing unit capable of interpreting and/or executing computer-readable instructions. In one example, a physical processor may access and/or modify one or more modules stored in the above-described memory device. Examples of physical processors comprise, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the method steps described and/or illustrated herein may represent portions of a single application. In addition, in some embodiments one or more of these steps may represent or correspond to one or more software applications or programs that, when executed by a computing device, may cause the computing device to perform one or more tasks, such as the method step.

In addition, one or more of the devices described herein may transform data, physical devices, and/or representations of physical devices from one form to another. Additionally or alternatively, one or more of the modules recited herein may transform a processor, volatile memory, non-volatile memory, and/or any other portion of a physical computing device from one form of computing device to another form of computing device by executing on the computing device, storing data on the computing device, and/or otherwise interacting with the computing device.

A person of ordinary skill in the art will recognize that any process or method disclosed herein can be modified in many ways. The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed.

The various exemplary methods described and/or illustrated herein may also omit one or more of the steps described or illustrated herein or comprise additional steps in addition to those disclosed. Further, a step of any method as disclosed herein can be combined with any one or more steps of any other method as disclosed herein.

The processor as described herein can be configured to perform one or more steps of any method disclosed herein. Alternatively or in combination, the processor can be configured to combine one or more steps of one or more methods as disclosed herein.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and shall have the same meaning as the word "comprising.

The processor as disclosed herein can be configured with instructions to perform any one or more steps of any method as disclosed herein.

It will be understood that although the terms "first," "second," "third", etc. may be used herein to describe various layers, elements, components, regions or sections without referring to any particular order or sequence of events. These terms are merely used to distinguish one layer, element, component, region or section from another layer, element, component, region or section. A first layer, element, component, region or section as described herein could be referred to as a second layer, element, component, region or section without departing from the teachings of the present disclosure.

As used herein, the term "or" is used inclusively to refer items in the alternative and in combination.

As used herein, characters such as numerals refer to like elements.

Embodiments of the present disclosure have been shown and described as set forth herein and are provided by way of example only. One of ordinary skill in the art will recognize numerous adaptations, changes, variations and substitutions without departing from the scope of the present disclosure. Several alternatives and combinations of the embodiments disclosed herein may be utilized without departing from the scope of the present disclosure and the inventions disclosed herein. Therefore, the scope of the presently disclosed inventions shall be defined solely by the scope of the appended claims.

## Claims

1. A method (900) for use in additively manufacturing an orthodontic aligner, the method comprising:
receiving a digital model of an aligner (920);
processing (930) the digital model (940) of the aligner to modify the digital model based on predicted deviations during fabrication to generate a first updated digital model of the aligner;
determining (950) that whether the predicted deviations of a physical aligner additively manufactured based on the first updated digital model of the aligner are acceptable; and
outputting (986) the first updated digital model of the aligner for fabrication of the physical aligner by additive manufacture of the physical aligner;
receiving real-time fabrication parameters during fabrication of the physical aligner;
processing the first updated digital model to determine predicted deviations of the physical aligner based on the real-time fabrication parameters; and
modifying the digital model based on the predicted deviations.

2. The method of claim 1, further comprising:
determining predicted deviations of the physical aligner exceed a threshold; and
updating the first updated digital model of the aligner.

3. The method of any one of claims 1 or 2, wherein the predicted deviations during fabrication are based on one or more parameters (960).

4. The method of claim 3, wherein the one or more parameters include aligner geometry parameters, and, optionally, wherein the aligner geometry parameters include angles of the aligner surfaces or thickness of the aligner at locations of the aligner.

5. The method of any one of claims 3 or 4, wherein one or more parameters include fabrication parameters, and, optionally, wherein the fabrication parameters include material type, exposure time, exposure power, or material.

6. The method of any one of claims 1-5, wherein real-time parameters include material temperature, ambient temperature, or ambient humidity.

7. The method of any one of claims 1-6, wherein a prediction model is used to generate the predicted deviations, and, optionally, wherein the prediction model is an empirical model.

8. The method of claim 7, wherein the prediction model is a machine learning model.

9. The method of claim 8, wherein the machine learning model is a neural network, further comprising:
training the neural network based on previously fabricated physical parts, and, optionally, wherein the training is also based on fabrication parameters and deviations between the geometry of the fabricated physical parts and digital models used to fabricate the fabricated physical parts.

10. The method of claim 9, wherein the training of the neural network further comprises registering the digital models used to fabricate the fabricated physical parts with digital models of the physical parts.

11. The method of any one of claims 1-10, further comprising: generating a digital image of a physical fabricated slice of the first updated digital model;
comparing the geometry of the physical fabricated slice of the first updated digital model depicted in the digital image and a geometry of a corresponding slice of the first updated digital model; and
updating a next slice of the first updated digital model based on the comparing and/or updating a geometry of the slice of the first updated digital model based on the comparing to generate an updated slice.

12. The method of claim 11, further comprising:
fabricating the updated slice.

13. The method of any one of claims 11-12, wherein the digital model of the physical fabricated slice is based on a 2D digital image of the fabricated slice.

14. A method of fabricating an orthodontic aligner, comprising the method of any previous claim.

15. A system for use in fabricating an orthodontic aligner, the system comprising:
a processor; and
memory comprising instructions that when executed by the processor cause the system to carry out the method of any one of claims 1-13;
and, optionally, a fabrication machine.

## Patentansprüche

1. Verfahren (900) zur Verwendung bei der additiven Fertigung eines kieferorthopädischen Aligners, wobei das Verfahren Folgendes umfasst:
Empfangen eines digitalen Modells eines Aligners (920); Verarbeiten (930) des digitalen Modells (940) des Aligners, um das digitale Modell basierend auf vorhergesagten Abweichungen während der Fertigung zu modifizieren, um ein erstes aktualisiertes digitales Modell des Aligners zu generieren;
Bestimmen (950), ob die vorhergesagten Abweichungen eines basierend auf dem ersten aktualisierten digitalen Modell des Aligners additiv gefertigten physischen Aligners akzeptabel sind; und
Ausgeben (986) des ersten aktualisierten digitalen Modells des Aligners zur Fertigung des physischen Aligners durch additive Fertigung des physischen Aligners;
Empfangen von Echtzeit-Fertigungsparametern während der Fertigung des physischen Aligners;
Verarbeiten des ersten aktualisierten digitalen Modells, um vorhergesagte Abweichungen des physischen Aligners basierend auf den Echtzeit-Fertigungsparametern zu bestimmen; und
Modifizieren des digitalen Modells basierend auf den vorhergesagten Abweichungen.

2. Verfahren nach Anspruch 1, das ferner umfasst:
Bestimmen, dass vorhergesagte Abweichungen des physischen Aligners eine Schwelle überschreiten; und
Aktualisieren des ersten aktualisierten digitalen Modells des Aligners.

3. Verfahren nach einem der Ansprüche 1 oder 2, wobei die vorhergesagten Abweichungen während der Fertigung auf einem oder mehreren Parametern basieren (960).

4. Verfahren nach Anspruch 3, wobei der eine oder die mehreren Parameter Aligner-Geometrieparameter einschließen, und wobei gegebenenfalls die Aligner-Geometrieparameter Winkel der Aligneroberflächen oder Dicke des Aligners an Positionen des Aligners einschließen.

5. Verfahren nach einem der Ansprüche 3 oder 4, wobei ein oder mehrere Parameter Fertigungsparameter einschließen, und wobei gegebenenfalls die Fertigungsparameter Materialtyp, Belichtungszeit, Belichtungsleistung oder Material einschließen.

6. Verfahren nach einem der Ansprüche 1-5, wobei Echtzeitparameter Materialtemperatur, Umgebungstemperatur oder Umgebungsfeuchtigkeit einschließen.

7. Verfahren nach einem der Ansprüche 1-6, wobei ein Vorhersagemodell verwendet wird, um die vorhergesagten Abweichungen zu generieren, und wobei gegebenenfalls das Vorhersagemodell ein empirisches Modell ist.

8. Verfahren nach Anspruch 7, wobei das Vorhersagemodell ein Maschinenlernmodell ist.

9. Verfahren nach Anspruch 8, wobei das Maschinenlernmodell ein neuronales Netzwerk ist, das ferner Folgendes umfasst:
Trainieren des neuronalen Netzwerks basierend auf zuvor gefertigten physischen Teilen, und wobei gegebenenfalls das Training auch auf Fertigungsparametern und Abweichungen zwischen der Geometrie der gefertigten physischen Teile und digitalen Modellen basiert, die zum Fertigen der gefertigten physischen Teile verwendet werden.

10. Verfahren nach Anspruch 9, wobei das Training des neuronalen Netzwerks ferner Registrieren der digitalen Modelle umfasst, die zum Fertigen der gefertigten physischen Teile mit digitalen Modellen der physischen Teile verwendet werden.

11. Verfahren nach einem der Ansprüche 1-10, das ferner umfasst: Generieren eines digitalen Bildes eines physisch gefertigten Slices des ersten aktualisierten digitalen Modells;
Vergleichen der Geometrie des physisch gefertigten Slices des ersten aktualisierten digitalen Modells, das in dem digitalen Bild dargestellt ist, und einer Geometrie eines entsprechenden Slices des ersten aktualisierten digitalen Modells; und
Aktualisieren eines nächsten Slices des ersten aktualisierten digitalen Modells basierend auf dem Vergleichen und/oder Aktualisieren einer Geometrie des Slices des ersten aktualisierten digitalen Modells basierend auf dem Vergleichen, um einen aktualisierten Slice zu generieren.

12. Verfahren nach Anspruch 11, das ferner umfasst:
Fertigen des aktualisierten Slices.

13. Verfahren nach einem der Ansprüche 11-12, wobei das digitale Modell des physisch gefertigten Slices auf einem digitalen 2D-Bild des gefertigten Slices basiert.

14. Verfahren zur Fertigung eines kieferorthopädischen Aligners, umfassend das Verfahren nach einem der vorhergehenden Ansprüche.

15. System zur Verwendung bei der Fertigung eines kieferorthopädischen Aligners, wobei das System Folgendes umfasst:
einen Prozessor; und
Speicher, der Anweisungen umfasst, die, wenn sie durch den Prozessor ausgeführt werden, bewirken, dass das System das Verfahren nach einem der Ansprüche 1-13; ausführt
und gegebenenfalls eine Fertigungsmaschine.

## Revendications

1. Procédé (900) destiné à être utilisé dans la fabrication additive d'une gouttière orthodontique, le procédé comprenant :
la réception d'un modèle numérique d'une gouttière (920) ;
le traitement (930) du modèle numérique (940) de la gouttière pour modifier le modèle numérique sur la base d'écarts prédits pendant la fabrication pour générer un premier modèle numérique mis à jour de la gouttière ;
la détermination (950) établissant si les écarts prédits d'une gouttière physique fabriquée de manière additive sur la base du premier modèle numérique mis à jour de la gouttière sont acceptables ou non ; et
la sortie (986) du premier modèle numérique mis à jour de la gouttière pour la fabrication de la gouttière physique par fabrication additive de la gouttière physique ;
la réception de paramètres de fabrication en temps réel pendant la fabrication de la gouttière physique ;
le traitement du premier modèle numérique mis à jour pour déterminer des écarts prédits de la gouttière physique sur la base des paramètres de fabrication en temps réel ; et
la modification du modèle numérique sur la base des écarts prédits.

2. Procédé selon la revendication 1, comprenant en outre :
la détermination que des écarts prédits de la gouttière physique dépassent un seuil ; et
la mise à jour du premier modèle numérique mis à jour de la gouttière.

3. Procédé selon l'une quelconque des revendications 1 ou 2, dans lequel les écarts prédits pendant la fabrication sont basés sur un ou plusieurs paramètres (960).

4. Procédé selon la revendication 3, dans lequel le ou les paramètres comportent des paramètres de géométrie de gouttière, et, facultativement, dans lequel les paramètres de géométrie de gouttière comportent des angles des surfaces de gouttière ou l'épaisseur de la gouttière à des emplacements de la gouttière.

5. Procédé selon l'une quelconque des revendications 3 ou 4, dans lequel un ou plusieurs paramètres comportent des paramètres de fabrication, et, facultativement, dans lequel les paramètres de fabrication comportent le type de matériau, le temps d'exposition, la puissance d'exposition ou le matériau.

6. Procédé selon l'une quelconque des revendications 1 à 5, dans lequel les paramètres en temps réel comportent la température du matériau, la température ambiante ou l'humidité ambiante.

7. Procédé selon l'une quelconque des revendications 1 à 6, dans lequel un modèle de prédiction est utilisé pour générer les écarts prédits, et, facultativement, dans lequel le modèle de prédiction est un modèle empirique.

8. Procédé selon la revendication 7, dans lequel le modèle de prédiction est un modèle d'apprentissage automatique.

9. Procédé selon la revendication 8, dans lequel le modèle d'apprentissage automatique est un réseau neuronal, comprenant en outre :
l'entraînement du réseau neuronal sur la base de pièces physiques fabriquées au préalable et, facultativement, dans lequel l'entraînement est également basé sur des paramètres de fabrication et des écarts entre la géométrie des pièces physiques fabriquées et des modèles numériques utilisés pour fabriquer les pièces physiques fabriquées.

10. Procédé selon la revendication 9, dans lequel l'entraînement du réseau neuronal comprend en outre le recalage des modèles numériques utilisés pour fabriquer les pièces physiques fabriquées avec des modèles numériques des pièces physiques.

11. Procédé selon l'une quelconque des revendications 1 à 10, comprenant en outre : la génération d'une image numérique d'une coupe fabriquée physique du premier modèle numérique mis à jour ;
la comparaison de la géométrie de la coupe fabriquée physique du premier modèle numérique mis à jour représenté dans l'image numérique et d'une géométrie d'une coupe correspondante du premier modèle numérique mis à jour ; et
la mise à jour d'une coupe suivante du premier modèle numérique mis à jour sur la base de la comparaison et/ou la mise à jour d'une géométrie de la coupe du premier modèle numérique mis à jour sur la base de la comparaison pour générer une coupe mise à jour.

12. Procédé selon la revendication 11, comprenant en outre :
la fabrication de la coupe mise à jour.

13. Procédé selon l'une quelconque des revendications 11 à 12, dans lequel le modèle numérique de la coupe fabriquée physique est basé sur une image numérique 2D de la coupe fabriquée.

14. Procédé de fabrication d'une gouttière orthodontique, comprenant le procédé selon une quelconque revendication précédente.

15. Système destiné à être utilisé dans la fabrication d'une gouttière orthodontique, le système comprenant :
un processeur ; et
une mémoire comprenant des instructions qui, lorsqu'elles sont exécutées par le processeur, amènent le système à réaliser le procédé selon l'une quelconque des revendications 1 à 13 ;
et, facultativement, une machine de fabrication.
